(19) Europäisches Patentamt / European Patent Office / Office européen des brevets

(11) **EP 3 303 250 B1**

(12) **FASCICULE DE BREVET EUROPEEN**

(45) Date de publication et mention
de la délivrance du brevet:
**25.11.2020 Bulletin 2020/48**

(21) Numéro de dépôt: **16736517.0**

(22) Date de dépôt: **03.06.2016**

(51) Int Cl.:
*C04B 28/06* (2006.01)          *C04B 7/32* (2006.01)

(86) Numéro de dépôt international:
**PCT/FR2016/051337**

(87) Numéro de publication internationale:
**WO 2016/193642 (08.12.2016 Gazette 2016/49)**

(54) **COMPOSITION COMPRENANT UN ALUMINATE DE CALCIUM AMORPHE ET PROCÉDÉ DE FABRICATION ASSOCIÉ**

ZUSAMMENSETZUNG MIT EINEM AMORPHEN CALCIUMALUMINAT UND ZUGEHÖRIGES HERSTELLUNGSVERFAHREN

COMPOSITION COMPRISING AN AMORPHOUS CALCIUM ALUMINATE AND ASSOCIATED PRODUCTION METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.06.2015 FR 1555036**

(43) Date de publication de la demande:
**11.04.2018 Bulletin 2018/15**

(73) Titulaire: **Kerneos**
**92800 Puteaux (FR)**

(72) Inventeurs:
• BRIGANDAT, Pierre
69110 Ste Foy Les Lyon (FR)
• MAHIAOUI, Jamel
11000 Carcassonne (FR)
• ESTIVAL, Jacques
38300 Bourgoin Jallieu (FR)

(74) Mandataire: **Lavoix**
**2, place d'Estienne d'Orves**
**75441 Paris Cedex 09 (FR)**

(56) Documents cités:
**DE-A1- 3 610 586     JP-A- 2014 129 204**

• K Nakagawa ET AL: "A STUDY OF HYDRATION OF AMORPHOUS CALCIUM ALUMINATE BY SELECTIVE DISSOLUTION ANALYSIS", CEMENT and CONCRETE RESEARCH $3.00+00. Copyright (c), 1 janvier 1990 (1990-01-01), pages 655-661, XP055262904, Extrait de l'Internet: URL:http://www.sciencedirect.com/science/article/pii/000888469090108A/pdf?md5=473cdd 3acb248fb1358151f99eb90045&pid=1-s2.0-0008 88469090108A-main.pdf [extrait le 2016-04-05]

**Description**

DOMAINE TECHNIQUE AUQUEL SE RAPPORTE L'INVENTION

La présente invention se rapporte au domaine des compositions à base d'aluminates de calcium amorphes.
Elle concerne un procédé de fabrication d'une composition à base d'aluminates de calcium amorphes

ARRIERE-PLAN TECHNOLOGIQUE

Les aluminates de calcium sont un des constituants principaux des ciments alumineux couramment utilisés pour fabriquer des liants, bétons ou mortiers (mortiers de chimie du bâtiment, mortiers réfractaires, etc.).
On distingue en particulier deux catégories principales de ciments alumineux : les ciments d'aluminates de calcium cristallins caractérisés à la fois par leur composition chimique et par leurs phases cristallines (phases minérales), et les ciments d'aluminates de calcium amorphes caractérisés par leur composition chimique.
En réalité, les aluminates de calcium sont en partie amorphes ou en partie cristallins, et sont classés dans l'une ou l'autre catégorie en fonction des taux de phases amorphes et de phases cristallines qu'ils présentent.
On désignera par la suite par « aluminate de calcium cristallin » des aluminates de calcium présentant des phases majoritairement cristallines et par « aluminate de calcium amorphe » des aluminates de calcium présentant des phases majoritairement amorphes.
Ici, nous nous intéressons plus particulièrement aux compositions comprenant des aluminates de calcium amorphes. Ils sont majoritairement composés d'oxyde de calcium ou chaux CaO (aussi notée C en notation cimentaire), d'alumine $Al_2O_3$ (notée A en notation cimentaire), et éventuellement de silice $SiO_2$, d'oxyde de fer $Fe_2O_3$. ou d'autres impuretés communément incluses dans les matières premières.
Il est connu de caractériser les aluminates de calcium amorphes par le rapport massique ou molaire entre la chaux (C) et l'alumine (A) qu'ils contiennent, plus couramment appelé ratio C/A (abréviation cimentaire).
En effet, les propriétés des aluminates de calcium amorphes, ainsi que les applications qui en découlent dépendent fortement du ratio molaire C/A.
Par exemple, les liants comprenant des aluminates de calcium amorphes dont le ratio molaire C/A est supérieur à 1,8 présentent un temps de prise très rapide, à savoir de quelques dizaines de minutes au maximum. Au contraire, ceux dont le ratio molaire C/A est inférieur à 1,8 présentent un temps de prise plus lent pouvant aller jusqu'à quelques heures.
A titre d'exemple, on choisira un aluminate de calcium amorphe présentant un ratio molaire C/A inférieur à 1,8 lorsque l'on désire fabriquer un liant présentant un temps de mise en œuvre relativement long et une certaine maniabilité dans le temps (ragréage de sol auto-lissant ou ouvrage préfabriqué) ; ou encore on choisira un aluminate de calcium amorphe présentant un ratio molaire C/A compris entre 1,5 et 1, lorsque l'on souhaite fabriquer un liant destiné à la fabrication de chape ou de colle à carrelage (temps de prise entre 2 heures et 4 heures).
Au contraire, lorsque l'on désire fabriquer un liant à prise ultra rapide pour réaliser un mortier ou un béton en milieu humide, on pourra utiliser un aluminate de calcium amorphe présentant un ratio molaire C/A entre 1,8 et 2 (temps de prise entre 10 et 20 minutes). De même, pour fabriquer un béton projeté ou une capsule d'ancrage pour laquelle un temps de prise de quelques secondes à 10 minutes est requis, on choisira un aluminate de calcium amorphe présentant un ratio molaire C/A compris entre 2 et 2,2.
Ainsi, pour chaque application envisagée, il est nécessaire de déterminer avec précision et d'optimiser le ratio molaire C/A de l'aluminate de calcium amorphe utilisé et à l'inverse, connaître avec précision le ratio molaire C/A d'un aluminate de calcium amorphe permet de choisir les applications auxquelles il est adapté. En corollaire, une fois l'application déterminée, la valeur du ratio molaire de l'aluminate de calcium amorphe utilisé doit rester la plus proche possible du ratio idéal requis par l'application, typiquement dans un intervalle de $\pm 0.1$, idéalement dans un intervalle de $\pm 0,05$, voire $\pm 0,02$.
Aujourd'hui, les aluminates de calcium amorphes sont donc produits de manière à présenter un ratio molaire chaux sur alumine prédéterminé en fonction de l'application envisagée.
DE3610586 décrit par exemple un procédé pour fabriquer un aluminate de calcium amorphe qui est préparé en calcinant au moins un aluminate de calcium, et en trempant le produit calciné produit par la mise en contact avec de l'air ou de l'eau. Le matériau est utilisé comme liant en mélangeant avec un matériau réfractaire tels que les matériaux alumineux, siliceux, alumine-siliceux ou magnésium, zirconium ou SiC.
En pratique, ces aluminates de calcium amorphes présentant un ratio molaire C/A prédéterminé peuvent actuellement être obtenus par voie dite chimique, par exemple par un procédé de fusion suivi d'un refroidissement rapide. Le document DE3610586 donne un exemple d'un tel aluminate de calcium amorphe.
L'obtention de cet aluminate de calcium amorphe avec le ratio molaire C/A prédéterminé par une réaction chimique est réalisée grâce à des conditions de temps et de températures données, avec des réactifs choisis et mélangés dans des proportions adéquates.

En particulier, cet aluminate de calcium amorphe peut actuellement être obtenu par un procédé de fusion. Ce procédé de fusion consiste à faire chauffer dans un four à fusion vertical et à très hautes températures (1300°C-2300°C) une quantité adéquate de blocs de calcaire ($CaCO_3$) et une quantité adéquate de bauxite monohydrate (roche minérale riche en alumine et contenant du fer et de la silice en quantités variables) pendant une durée permettant d'obtenir la fusion complète de ces matières premières (de 2 à 10 heures environ). Suite à cette étape, une masse liquide est récupérée par un trou de coulée à l'extrémité inférieure du four. La masse liquide, qui présente notamment une température allant de 1300°C à 1600°C est ensuite refroidie brutalement de sorte à faire baisser sa température en dessous de sa température de cristallisation (qui est généralement d'au plus 1200°C, plus classiquement inférieure à 1000°C). Le produit refroidi, appelé clinker, est ensuite broyé pour former une poudre d'aluminate de calcium amorphe, également appelée ciment d'aluminate de calcium amorphe.

Cependant, ce procédé d'obtention requiert des conditions opératoires contraignantes et coûteuses à la fois en énergie et en temps. En effet, la fabrication de cet aluminate de calcium amorphe par voie chimique nécessite l'emploi de températures très hautes, entre 1300°C et 1600°C pendant une durée conséquente.

De plus, les matières premières telles que les blocs de bauxite comprennent, de manière variable, des oxydes (oxyde de fer, silice) qui peuvent nuire à la reproductibilité de l'aluminate de calcium amorphe formé et également à la détermination spécifique du ratio molaire C/A souhaité.

En outre, puisque l'application à laquelle est destiné chaque aluminate de calcium amorphe dépend de son ratio molaire C/A, il convient de produire séparément un grand nombre d'aluminates de calcium amorphes différents, chacun ayant un ratio molaire C/A adapté à une application particulière, ce qui augmente la complexité industrielle.

Notamment, pour chaque ratio molaire chaux sur alumine (C/A) que l'on souhaite atteindre, il est nécessaire d'optimiser les conditions expérimentales, notamment le choix des matières premières et leurs proportions respectives, la température de cuisson (un taux d'alumine élevé nécessite une température de cuisson supérieure), le temps de cuisson, et le temps de refroidissement final.

Par ailleurs, les aluminates de calcium cristallins sont connus depuis longtemps et sont produits par procédé de fusion suivi d'un refroidissement lent, ou par frittage.

Ils sont par exemple décrits par Kopanda et al., dans la publication « Production Processes, Properties and Applications for Calcium Aluminate Cements », Alumina Chemicals Science and Technology handbook, American Ceramic Society (1990), pp 171-181. Parmi les principales phases cristallines rapportées par *Kopanda et al.*, celles qui sont le plus communément valorisées dans les applications industrielles sont l'aluminate de monocalcium ($CaO$-$Al_2O_3$, ou CA en notation cimentaire), l'hepta-aluminate de dodéca-calcium (($CaO)_{12}$-$(Al_2O_3)_7$, ou C12A7 en notation cimentaire), ou le di-aluminate de monocalcium (($CaO)$-$(Al_2O_3)_2$, ou CA2 en notation cimentaire).

Différents produits contenant des aluminates de calcium cristallins sont disponibles commercialement et il est connu de classifier ces produits par leur taux d'alumine, c'est-à-dire par la masse d'alumine qu'ils contiennent rapportée sur la masse totale du produit sec : autour de 40% (dans le Ciment Fondu® de la société Kerneos par exemple), 50% (dans le Secar®51 de la société Kerneos), ou 70% (dans le Secar®71 de la société Kerneos).

Il est également connu que la vitesse de dissolution des aluminates de calcium cristallins mélangés à de l'eau dépend très fortement de la nature et des quantités de chaque phase cristalline comprise dans l'aluminate de calcium cristallin.

Par exemple, la phase cristalline CA présente une vitesse de dissolution adaptée aux applications nécessitant un contrôle du temps ouvert, c'est-à-dire un contrôle du temps pendant lequel il est possible de travailler l'aluminate de calcium cristallin une fois qu'il a été mélangé à l'eau. Les ciments Secar®71, Secar®51 et Ciment Fondu® cités précédemment en sont des exemples.

A l'inverse, les aluminates de calcium cristallins plus riches en chaux, notamment en phase cristalline C12A7 peuvent être utilisés pour certaines applications nécessitant une hydratation (ou une dissolution dans l'eau) la plus rapide possible (béton projeté par exemple). Le produit commercialisé par le passé sous la marque Shotax®, par la société Lafarge Fondu International en est un exemple.

Ainsi, il est connu de mélanger différents aluminates de calciums cristallins pour optimiser la vitesse de dissolution d'un aluminate de calcium cristallin.

Cependant, il s'avère que le mélange dans l'eau de deux aluminates de calcium cristallins, chacun ayant une composition chimique globale connue, c'est-à-dire un ratio molaire C/A connu, ne permet pas de prévoir le ratio molaire C/A final de l'aluminate de calcium cristallin dissout résultant de ce mélange.

D'ailleurs, la seule connaissance de la composition chimique d'un aluminate de calcium cristallin ne permet pas de prévoir son comportement, de sorte qu'une augmentation de quelques pourcents de C12A7 peut entraîner une forte diminution du temps ouvert d'un mortier voire mener à une prise instantanée de ce mortier.

Par exemple, l'homme de l'art sait que le mélange formé de deux aluminates de calcium cristallins, broyés à la même finesse (ou surface spécifique Blaine), l'un contenant principalement la phase cristalline C12A7 (tel que le Shotax®) de ratio molaire C/A égal à 1,7, et l'autre contenant les phases cristallines CA et CA2 (tel que le Secar®71) de ratio molaire C/A égal à 0,64, le mélange étant effectué dans des proportions adéquates pour obtenir un ratio molaire C/A de 1 pour l'aluminate de calcium cristallin résultant, conduit à une prise flash (c'est-à-dire de l'ordre de la minute) lorsqu'il est préparé en mortier simple (préparation et composition selon la norme EN 196-1, mais avec 500g de ciment, 1350g de sable et 200g d'eau). Or, le comportement associé à ce mélange d'aluminates de calcium cristallins est très différent du comportement associé à un aluminate de calcium cristallin de phase cristalline CA, de ratio molaire C/A proche de 1, obtenu directement par un procédé de fusion ou de frittage, qui présente dans les mêmes conditions d'essai un temps de prise de l'ordre de trois heures.

En conséquence, il n'existe pas de méthode générale permettant de concevoir un mélange d'aluminates de calcium cristallins dont la réactivité serait contrôlée ou pourrait être prédéterminée.

D'autre part, il est également connu de mélanger un aluminate de calcium cristallin et un aluminate de calcium amorphe de manière à obtenir un aluminate de calcium final présentant des propriétés souhaitées.

On connait par exemple du document JP2014129203 un aluminate de calcium obtenu en mélangeant des poudres d'aluminate de calcium cristallin et d'aluminate de calcium amorphe, dans des proportions données.

Cependant, l'aluminate de calcium final obtenu via cette technique présente moins de phase amorphe que les aluminates de calcium obtenu par voie chimique, et ses propriétés sont donc différentes de celles des aluminates de calcium amorphes obtenus par voie chimique décrits ci-dessus.

Notamment la mesure du ratio molaire C/A effectuée sur les poudres d'aluminates de calcium obtenues via cette technique ne correspond pas à la quantité de chaux et d'alumine qui passe réellement en solution lors de la mise en contact de ces poudres avec l'eau. Il est par conséquent impossible de prédire le ratio molaire C/A de tels composés.

Ainsi, il existe un réel besoin de développer une nouvelle composition comprenant un aluminate de calcium amorphe présentant un ratio C/A compris dans un intervalle prédéterminé, et présentant au moins les mêmes propriétés réactives que les aluminates de calcium amorphes connus à ce jour. Egalement, il existe un besoin dans l'état de la technique de fournir au moins un procédé de fabrication d'une composition comprenant un aluminate de calcium amorphe pour lequel on puisse choisir le ratio molaire C/A que l'on souhaite et qui soit facile et rapide à mettre en oeuvre.

Un des buts de la présente invention est de proposer une nouvelle composition comprenant un aluminate de calcium amorphe ainsi qu'un nouveau procédé de fabrication de cette composition qui évitent, au moins en partie, les inconvénients précités.

OBJET DE L'INVENTION

A cet effet, la présente invention a pour objet un procédé selon la revendication 1.

Dans ce procédé, lesdites première et deuxième quantités desdits premier et deuxième aluminates de calcium amorphes sont en particulier déterminées de telle sorte que le ratio molaire chaux sur alumine du mélange formé par ces premier et deuxième aluminates de calcium amorphes soit égal au ratio molaire chaux sur alumine final $R_F$ souhaité.

Dans le cadre de la présente invention, le terme « mélange » désigne un mélange dans lequel les composants de départ sont intimement liés sans qu'ils ne réagissent entre eux pour former un autre composant, à savoir ici, dans la composition, on retrouve à la fois le premier aluminate de calcium amorphe et le deuxième aluminate de calcium amorphe. Autrement dit, le terme « mélange » désigne une opération à l'issue de laquelle se retrouvent sous forme de poudre mélangée de façon homogène les composants de départ. Ceci peut être vérifié sous microscope à balayage électronique en mode analyse chimique. Ainsi, à l'échelle microscopique, on est encore capable de distinguer chacun des composants de départ dudit mélange.

Selon l'invention, le ratio molaire chaux sur alumine désigne le rapport de la quantité de matière de chaux sur la quantité de matière d'alumine, en moles, compris dans un aluminate de calcium amorphe. Dans la suite de la description, le ratio molaire chaux sur alumine sera souvent abrégé en ratio molaire C/A, voire en ratio molaire.

Comme il ressort de la suite de la description, le ratio molaire chaux sur alumine souhaité final $R_F$ est choisi en fonction de l'application dans laquelle il est envisagé d'utiliser la composition selon l'invention.

Avantageusement, la composition obtenue selon le procédé de l'invention est adaptée à former un ciment d'aluminate de calcium amorphe.

Dans le reste de la description, le ciment désigne une poudre d'aluminate de calcium amorphe.

Le ciment peut être utilisé en tant que « liant », aussi appelé « liant hydraulique ». On entend par « liant » une poudre, ou un mélange de poudres, adaptée à être mélangée avec de l'eau pour former un matériau à consistance pâteuse susceptible de durcir pour agglomérer des agrégats entre eux.

Autrement dit, dans le reste de la description, on parlera de « liant » ou de « liant hydraulique » pour désigner les matériaux qui, gâchés à l'eau, durcissent à froid, sans addition d'un autre corps réactif et aussi bien dans l'air que dans l'eau.

Lorsque le « liant hydraulique » est mélangé avec de l'eau, et qu'il durcit à son contact, on dit qu'il prend prise.

Dans le cadre de l'invention, le temps de prise est lié au ratio molaire C/A : plus il est grand, plus la prise, ou le durcissement, est rapide. Le procédé de fabrication selon l'invention permet ainsi de fabriquer des compositions dans lesquelles les aluminates de calciums amorphes présentent un ratio molaire C/A précis en fonction des applications souhaitées pour ces compositions.

En outre, d'autres composés peuvent être ajoutés à la composition.

Par exemple, des liants tels que des ciments Portland, des sulfates de calcium, ou un de leur mélange peuvent être ajoutés à la composition.

Ainsi, avantageusement, selon l'invention, la composition obtenue selon le procédé de l'invention est adaptée à former un liant hydraulique.

Certains liants hydrauliques sont susceptibles d'agglomérer des agrégats tels que des sables et/ou des granulats afin de constituer des mortiers et/ou des bétons.

Ainsi, des agrégats peuvent également être ajoutés à la composition alors avantageusement adaptée à former un mortier ou un béton, en fonction de la taille de ces agrégats.

Le terme « mortier » désigne classiquement un matériau comprenant un liant hydraulique, du sable ou d'autres agrégats fins tels que le carbonate de calcium, et éventuellement des adjuvants. Il se distingue du béton par l'absence de gravillons. Il s'agit d'un mélange ayant une consistance pâteuse et qui peut être utilisé pour rendre cohésifs des pierres ou des parpaings. Il peut également jouer un rôle de colle, et peut être utilisé pour combler des espaces entre pierres à bâtir par exemple. Le mortier peut en outre être utilisé en tant que tel, et s'agglomérer à lui-même,

Par béton, on entend un matériau de construction formé par le mélange d'un liant hydraulique, de granulats, et éventuellement complété par des adjuvants. Ce mélange qui est mis en œuvre sur chantier ou en usine à l'état plastique, peut adopter des formes très diverses parce qu'il est moulable. Il durcit progressivement pour former finalement un monolithe.

D'autres caractéristiques non limitatives et avantageuses du procédé de fabrication conforme à l'invention sont données dans les sous-revendications 2 à 12.

Eventuellement, des agents de mouture ou d'autres additifs apportant des propriétés supplémentaires peuvent également être mélangés soit à l'étape a) soit à l'étape c).

Dans la suite de la description et à moins qu'il n'en soit spécifié autrement, l'indication d'un intervalle de valeurs « de X à Y » ou « entre X et Y » s'entend comme incluant les valeurs X et Y. Au contraire, un intervalle de valeurs qui s'étend « strictement de X à Y » ou « strictement entre X et Y » s'entend comme excluant les valeurs X et Y.

Selon l'invention, tous les pourcentages en masse, sans indication spécifique contraire, sont exprimés par rapport aux masses de matière sèche des compositions (liant, mortier ou encore béton).

DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :

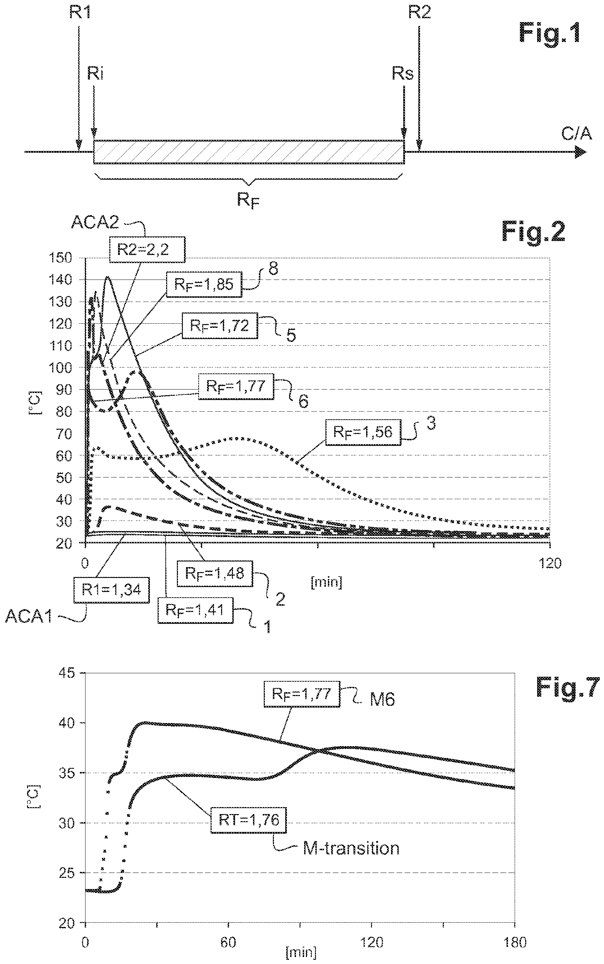

- la figure 1 est un schéma illustrant les premier et deuxième ratios molaires R1, R2 des premier et deuxième aluminates de calcium amorphes, par rapport au ratio molaire C/A final RF dudit aluminate de calcium amorphe compris dans la composition selon l'invention, ledit ratio molaire final RF s'étendant entre une borne inférieure Ri et une borne supérieure Rs ;
- la figure 2 est un graphique représentant le profil exothermique de six compositions obtenues selon le procédé de l'invention formant des ciments d'aluminates de calcium amorphes (exemples 1, 2, 3, 5, 6 et 8), et des premier et deuxième aluminates de calcium amorphes obtenus par voie chimique (ACA1, ACA2), le profil exothermique étant l'évolution de la température en degrés Celsius (°C) en fonction du temps en minutes (min) après gâchage à l'eau ;

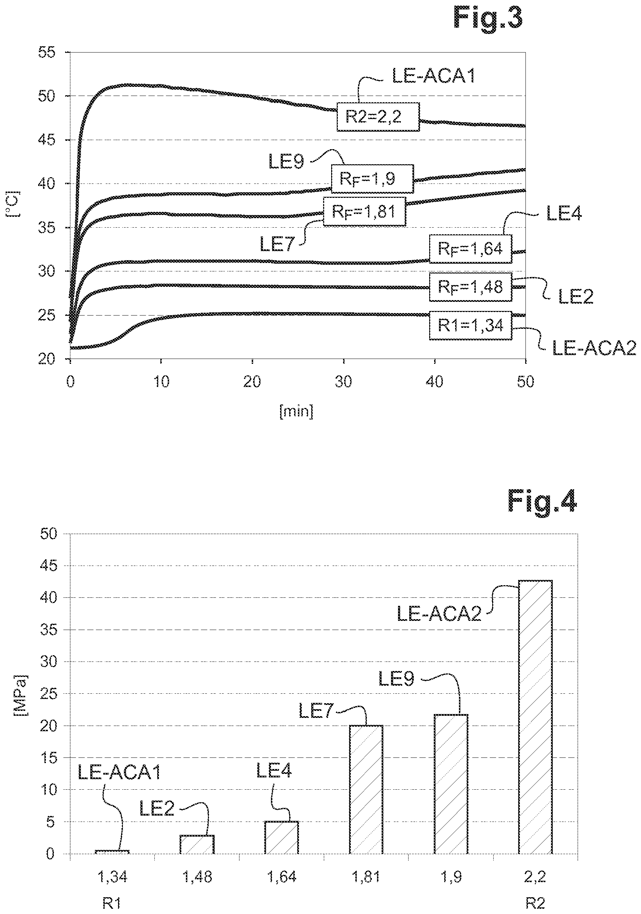

- la figure 3 est un graphique représentant le profil exothermique de quatre compositions obtenues selon le procédé de l'invention formant des liants ettringitiques (LE2, LE4, LE7 et LE9), et de liants ettringitiques comprenant respectivement le premier ou le deuxième aluminate de calcium amorphe obtenu par voie chimique (LE-ACA1 et LE-ACA2) ;
- la figure 4 est un diagramme représentant la résistance à la compression mécanique en MégaPascal (MPa) des six liants ettringitiques étudiés en figure 3 (LE2, LE4, LE7, LE9, LE-ACA1 et LE-ACA2) ;

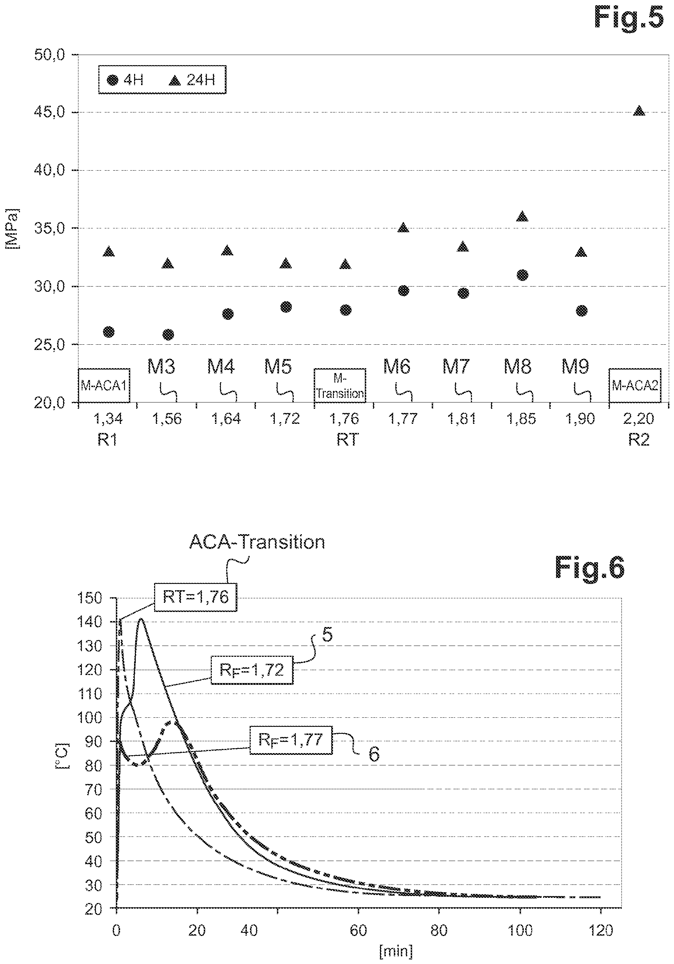

- la figure 5 est un diagramme représentant la résistance à la compression mécanique en MégaPascal (MPa) de sept compositions obtenues selon le procédé de l'invention formant des mortiers (M3, M4, M5, M6, M7, M8 et M9), du mortier comparatif (M-Transition), et des mortiers comprenant respectivement le premier ou le deuxième aluminate de calcium amorphe obtenu par voie chimique (M-ACA1 et M-ACA2) ;
- la figure 6 est un graphique représentant le profil exothermique de l'aluminate de calcium amorphe comparatif (ACA-Transition) et des deux compositions obtenues selon le procédé de l'invention comprenant les aluminates de calcium amorphes des exemples 5 et 6 ; et,
- la figure 7 est un graphique représentant le profil exothermique du mortier comparatif (M-Transition), et de la composition obtenue selon le procédé de l'invention formant le mortier M6.

La Demanderesse s'est attachée au développement d'une composition comprenant un aluminate de calcium amorphe dont le ratio molaire C/A peut être adapté en fonction des applications visées et notamment du temps de prise hydraulique souhaité pour l'ouvrage en mortier ou en béton à réaliser.

A cet effet et en se référant à la figure 1, la présente invention porte sur une composition obtenue selon le procédé de l'invention comprenant un aluminate de calcium amorphe présentant un ratio molaire chaux sur alumine final RF compris dans un intervalle prédéterminé qui s'étend entre une borne inférieure Ri et une borne supérieure Rs, ladite borne inférieure Ri étant différente de la borne supérieure Rs, dans laquelle ledit aluminate de calcium amorphe est un mélange entre au moins :

- un premier aluminate de calcium amorphe présentant un premier ratio molaire chaux sur alumine R1 strictement inférieur à la borne inférieure Ri dudit intervalle prédéterminé, et
- un deuxième aluminate de calcium amorphe présentant un deuxième ratio molaire chaux sur alumine R2 strictement supérieur à la borne supérieure Rs dudit intervalle prédéterminé.

La Demanderesse a découvert, de façon inattendue, que le mélange entre un premier aluminate de calcium amorphe présentant un premier ratio molaire C/A, noté R1, relativement faible, et un deuxième aluminate de calcium amorphe présentant un deuxième ratio molaire C/A, noté R2, plus élevé, forme un aluminate de calcium amorphe final présentant un ratio molaire C/A précis strictement compris entre R1 et R2, cet aluminate de calcium amorphe final se comportant alors de façon similaire à un aluminate de calcium amorphe de ratio molaire C/A analogue qui serait obtenu par voie chimique.

Ainsi, alors que les premier et deuxième aluminates de calcium amorphes utilisés pour le mélange sont chacun inadaptés pour l'application envisagée lorsqu'ils sont considérés seuls car leur premier et deuxième ratio molaire respectif R1, R2 sont trop éloignés du ratio molaire RF adéquat pour ladite application, il est possible de fabriquer facilement un aluminate de calcium amorphe dont le ratio molaire final RF est adapté à l'application envisagée.

Le ratio molaire adéquat pour l'application envisagée doit être compris entre lesdits premier et deuxième ratios molaires R1, R2. Autrement dit, l'un desdits premier et deuxième ration molaire est strictement supérieur au ratio molaire final souhaité RF et l'autre est strictement inférieur à ce ratio molaire final RF.

Comme cela sera décrit dans la suite de la description, la composition obtenue selon le procédé de l'invention peut être utilisée pour former, entre autres, un ciment, un liant ettringitique ou encore un mortier. De façon inattendue, la Demanderesse a découvert que les propriétés réactives ou mécaniques de ces ciments, liants ettringitiques ou mortiers sont similaires à celles des ciments, liants ettringitiques ou mortiers formés à partir des aluminates de calcium amorphes déjà connus, à ratio molaire C/A équivalent.

Dans le reste de la description, on appellera « aluminate de calcium amorphe final » le mélange entre les premier et deuxième aluminates de calcium amorphes.

On appellera « premier et deuxième aluminates de calcium » deux mélanges comprenant :

- majoritairement, un aluminate de calcium tel que décrit ci-dessous, et éventuellement,
- minoritairement, d'autres composés tels que des impuretés et/ou des agents de traitement, par exemple des agents de traitement antivieillissement et/ou des agents de mouture.

En général, un aluminate de calcium, que ce soit le premier aluminate de calcium amorphe, le deuxième aluminate de calcium amorphe ou encore l'aluminate de calcium amorphe final, est dit amorphe lorsqu'il comprend, en masse, par rapport à la masse totale dudit aluminate de calcium amorphe, au moins 60% de phases amorphes, en particulier au moins 70% et typiquement 80%, voire 90% de phases amorphes, c'est-à-dire que son taux de phases cristallines est respectivement inférieur ou égal à 40%, 30%, 20% voire 10%.

Au sens de l'invention, l'expression au moins 60% de phases amorphes englobe au moins 60%, 65%, 70%, 75%, 80%, 82%, 84%, 85%, 86%, 87%, 88%, 89%, 90%, 91%, 92%, 93%, 94%, 95%, 96%, 97%, 98%, 99%, voire 100% de phases amorphes.

Lorsqu'elles sont présentes, les phases cristallines peuvent être $CaO.Al_2O_3$ (noté dans la suite CA), $CaO.2Al_2O_3$ (noté dans la suite CA2), $3CaO.Al_2O_3$ (noté dans la suite C3A), $3CaO.3Al_2O_3+CaF_2$, $11CaO.7Al_2O_3.CaF_2$, $12CaO.7Al_2O_3$ (noté dans la suite C12A7), $4CaO.Al_2O_3.Fe_2O_3$ (noté dans la suite C4AF), ou $3CaO.3Al_2O_3+CaSO_4$ (noté dans la suite C4A3$) ou un de leurs mélanges. En général, les phases cristallines peuvent être $CaO.Al_2O_3$, ou $12CaO.7Al_2O_3$ ou un de leurs mélanges. On peut également retrouver des phases cristallines telles que $2CaO.Al_2O_3.SiO_2$ (noté dans la suite C2AS).

En particulier, ledit mélange formant l'aluminate de calcium amorphe final comprend une première quantité du premier aluminate de calcium amorphe et une deuxième quantité du deuxième aluminate de calcium amorphe, lesdites première et deuxième quantités étant déterminées de telle sorte que le ratio molaire chaux sur alumine final RF dudit aluminate de calcium amorphe final, correspondant à la moyenne des premier et deuxième ratios molaires chaux sur alumine R1, R2 pondérée par lesdites première et deuxième quantités, appartienne audit intervalle prédéterminé.

Cet intervalle prédéterminé correspond par exemple à un intervalle entourant la valeur RF, rassemblant les valeurs du ratio molaire pour lesquelles une même application peut être mise en œuvre.

Autrement dit, le ratio molaire chaux sur alumine final RF dudit aluminate de calcium amorphe final répond à la formule mathématique suivante :

$$R_F = M1 / (M1+M2) \times R1 + M2 / (M1+M2) \times R2,$$

où M1 et M2 sont les masses respectives des premier et deuxième aluminates de calcium amorphes dans le mélange.

Plus précisément, en pratique, on approxime la masse des premier et deuxième aluminates de calcium amorphes M1, M2 et la masse de l'aluminate de calcium amorphe final à la masse des composés chimiques d'aluminates de calcium qu'ils comprennent, les éventuelles impuretés et/ou éventuels agents de traitement étant minoritaires.

De façon particulièrement avantageuse, le ratio molaire C/A de l'aluminate de calcium amorphe final est ainsi modulable en fonction de la proportion entre les premier et deuxième aluminates de calcium amorphes dans le mélange et ce, sans avoir recours à un procédé par voie chimique.

Ainsi, il n'est plus nécessaire de passer par la voie chimique pour fabriquer chaque aluminate de calcium amorphe adapté à une application particulière, c'est-à-dire dont le ratio molaire C/A serait adéquat pour cette application particulière.

Ce comportement est d'autant plus surprenant qu'il n'en est pas ainsi pour les aluminates de calciums cristallins : mélanger deux aluminates de calcium cristallins ne permet généralement pas d'obtenir un aluminate de calcium cristallin final présentant une réactivité prévisible en fonction de la réactivité des deux aluminates de calcium cristallins mélangés.

En effet, ici, en fonction des valeurs exactes connues des premier et deuxième ratios molaires R1, R2, il est possible de déterminer la masse respective M1, M2 desdits premier et deuxième aluminates de calcium amorphes que le mélange formant l'aluminate de calcium amorphe final doit comprendre pour que le ratio molaire final RF de cet aluminate de calcium amorphe soit compris dans l'intervalle prédéterminé délimité par les bornes inférieure et supérieure Ri, Rs.

En particulier, en connaissant les premier et deuxième ratios molaires R1, R2 desdits premier et deuxième aluminates de calcium amorphes, il est possible de déterminer la masse respectives M1, M2 desdits premier et deuxième aluminates de calcium amorphes à mélanger de manière que le ratio molaire final $R_F$ de cet aluminate de calcium amorphe soit égal à une valeur prédéterminée choisie dans ledit intervalle prédéterminé.

De préférence, ledit mélange comprend, en masse par rapport à la masse totale dudit mélange, de 99,9% à 0,01%, de préférence de 5% à 95% et typiquement de 10% à 90% du premier aluminate de calcium amorphe et de 0,01% à 99,9%, de préférence de 5% à 95% et typiquement de 10% à 90% du deuxième aluminate de calcium amorphe.

En pratique, le ratio molaire final $R_F$ est choisi en fonction de l'application à laquelle est destinée la composition comprenant l'aluminate de calcium amorphe final selon l'invention.

Ainsi, l'intervalle prédéterminé (Ri, Rs) est un intervalle de valeurs possibles pour le ratio molaire final $R_F$ de sorte que l'application visée soit réalisable quel que soit la valeur du ratio molaire $R_F$ choisie dans cet intervalle prédéterminé.

L'intervalle prédéterminé tient également compte, d'une part, de l'éventuelle incertitude avec laquelle le ratio molaire final $R_F$ idéal (ou adéquat) associé à une application particulière est connu, et, d'autre part, de la précision avec laquelle on est capable d'atteindre ce ratio molaire final $R_F$ idéal. Notamment, les imprécisions de détermination des premier et deuxième ratios molaires R1, R2 associés aux premier et deuxième aluminates de calcium amorphes, et les imprécisions de pesée des masses respectives M1, M2 desdits premier et deuxième aluminates de calcium amorphes, peuvent engendrer des imprécisions sur l'obtention du ratio molaire final $R_F$ du mélange d'aluminates de calcium amorphes.

En pratique, l'écart entre la borne supérieure Rs et la borne inférieure Ri dudit intervalle prédéterminé, est supérieur ou égal à 0,02, de préférence supérieur ou égal à 0,05, et inférieur ou égal à 0,2, de préférence inférieur ou égal à 0,1.

D'une manière générale, on entend par « écart », la différence en valeur absolue. Ici, l'écart entre les bornes inférieures et supérieures Ri, Rs équivaut donc à |Rs - Ri|.

En particulier, l'écart entre la borne supérieure Rs et la borne inférieure Ri dudit intervalle prédéterminé peut valoir 0,02 ; 0,03 ; 0,04 ; 0,05 ; 0,06 ; 0,07 ; 0,08 ; 0,09 ; 0,1 ; 0,11 ; 0,12 ; 0,13 ; 0,14 ; 0,15 ; 0,16 ; 0,17 ; 0,18 ; 0,19 ; ou encore 0,2.

En variante, il est également possible d'envisager que l'intervalle prédéterminé soit plus grand, de manière à englober un grand nombre de valeurs différentes de ratio molaire final $R_F$ adaptés à des applications particulières différentes. Ainsi, à partir d'un couple de deux premier et deuxième aluminates de calcium amorphes donné, il est possible d'obtenir plusieurs aluminates de calcium amorphes finaux convenant pour des applications différentes, le ratio molaire final $R_F$ de chaque aluminate de calcium amorphe final susceptible d'être obtenu appartenant à l'intervalle prédéterminé. Avantageusement, il est ainsi possible d'obtenir des aluminates de calcium amorphes finaux convenant pour des applications particulières variées, alors même que ni le premier aluminate de calcium amorphe ni le deuxième aluminate de calcium amorphe, lorsque pris seul, ne conviennent pour ces applications.

Selon cette variante, l'écart entre la borne supérieure Rs et la borne inférieure Ri dudit intervalle prédéterminé est supérieur ou égal à 0,05, en particulier supérieur ou égal à 0,2 et typiquement supérieur ou égal à 0,5.

Selon cette variante encore, l'écart entre ladite borne supérieure Rs et ladite borne inférieure Ri dudit intervalle prédéterminé est strictement inférieur à 20, en particulier inférieur à 10 et typiquement inférieur à 5.

En particulier, selon cette variante, le ratio molaire final RF présente une valeur strictement supérieure à 0,01 et strictement inférieure à 20, de préférence comprise entre 0,5 et 9, notamment entre 1 et 3 et typiquement entre 1,38 et 2,15.

Au sens de l'invention, un intervalle supérieur à 0,05 et valeurs suivantes englobe 0,1 ; 0,15 ; 0 ,2 ; 0,25 ; 0,3 ; 0,35 ; 0,4 ; 0,45 ; 0,5 ; 0,55 ; 0,6 ; 0,7 ; 0,8 ; 0,9; 1 ; 1,1 ; 1,2; 1,3 ; 1,4 ; 1,5 ; 1,6; 1,7; 1,8 1,9 ; 2 ; 2,1 ; 2,2 ; 2,3 ; 2,4; 2,5 ; 2,6 ; 2,7 ; 2,8 ; 3 ; 3,5 ; 4 ; 4,5 ; 5 ; 5,5 ; 6 ; 6,5 ; 7 ; 7,5 ; 8 ; 8,5 ; 9 ; 9,5, voire 10 ou plus.

Egalement au sens de l'invention, un intervalle strictement inférieur à 20 et valeurs suivantes englobe 19 ; 18 ; 17 ; 16 ; 15 ; 14 ; 13 ; 12 ; 11 ; 10 ; 9 ; 8 ; 7 ; 6 ; 5 ; 4,5 ; 4 ; 3,9 ; 3,8 ; 3,7 ; 3,6 ; 3,5 ; 3,4 ; 3,3 ; 3,2 ; 3,1 ; 3 ; 2,9 ; 2,8 ; 2,7 ; 2,6 ; 2,5 ; 2,4 ; 2,3 ; 2,1 ; 2 ; 1,9 ; 1,8 ; 1,7 ; 1,6 ; 1,5 ; 1,4 ; 1,3 ; 1,2 ; 1,1 ; 1 ; 0,9 ; 0,8 ; 0,7 ou moins.

Ainsi, selon cette variante, l'écart entre lesdites bornes supérieure et inférieure Rs, Ri est d'au moins 0,05, étant entendu qu'il reste toujours strictement inférieur à l'écart entre lesdits premier et deuxième ratios molaires R1, R2.

Par ailleurs, d'une manière générale, quelle que soit la variante envisagée, il est préférable que l'écart entre la borne inférieure Ri de l'intervalle prédéterminé et le premier ratio molaire R1 du premier aluminate de calcium amorphe Ri - R1 soit d'au moins 0,05, de préférence d'au moins 0,1 et typiquement de 0,15 à 0,3.

Similairement, il est préférable que l'écart entre la borne supérieure Rs de l'intervalle prédéterminé et le deuxième ratio molaire R2 du deuxième aluminate de calcium amorphe R2 - Rs est d'au moins 0,05, de préférence d'au moins 0,1 et typiquement de 0,15 à 0,3.

Ainsi, les premier et deuxième aluminates de calcium amorphes qui ne conviennent pas, pris séparément, pour l'application particulière visée, sont néanmoins adaptés à former l'aluminate de calcium amorphe final qui convient pour cette application particulière. Avantageusement, cette caractéristique est vérifiée aussi bien lorsque l'intervalle prédéterminé est tel qu'il est possible d'atteindre des ratios molaires finaux $R_F$ ne convenant que pour une seule application, ou lorsque l'intervalle prédéterminé est tel qu'il est possible d'atteindre des ratios molaires finaux $R_F$ suffisamment éloignés les uns des autres pour convenir à des applications différentes.

Tous les aluminates de calcium amorphes connus à ce jour peuvent convenir comme premier et/ou deuxième aluminate de calcium amorphe.

En général, les premier et deuxième aluminates de calcium amorphes peuvent être obtenus par voie chimique telle que décrite ci-dessus dans la description de l'art antérieur, qui est la voie la plus classique d'obtention d'aluminates de calcium amorphes. Cette technique d'obtention est connue de l'homme du métier. Elle ne sera donc pas détaillée plus amplement ici.

En particulier, on préfère utiliser comme composés de départ, des premier et deuxième aluminates de calcium amorphes obtenus relativement facilement par cette voie chimique.

En variante, les aluminates de calcium amorphes finaux formé par le mélange desdits premier et deuxième aluminates de calcium amorphes peuvent également convenir en tant que premier et/ou deuxième aluminates de calcium amorphes pour l'obtention d'autres compositions selon l'invention.

Selon une première variante de réalisation, les premier et deuxième aluminates de calcium amorphes utilisés sont sous forme de poudre. Ces poudres présentent par exemple un diamètre médian d50 inférieur ou égal à 100 micromètres ($\mu$m). En particulier, le diamètre médian d50 des poudres, mesuré par granulométrie laser selon la norme ISO 13320, peut varier généralement entre 5 $\mu$m et 30 $\mu$m. Le diamètre médian d50 correspond au diamètre en dessous duquel se situe 50 pourcent en masse de la population étudiée (ici les particules de poudres).

En particulier, lesdites poudres présentent une surface spécifique Blaine, mesurée selon la norme NF EN196-6, comprise entre 2500 cm$^2$/g et 9000 cm$^2$/g.

Selon une autre variante de réalisation, les premier et deuxième aluminates de calcium amorphes utilisés peuvent être sous forme de clinker.

Par clinker d'aluminate de calcium amorphe, on entend un aluminate de calcium amorphe se présentant sous forme de particules dures, ayant en général une dimension caractéristique de l'ordre de quelques millimètres. Ces particules dures résultent de la cuisson à température élevée (généralement aux alentours de 1300°C-1600°C), généralement dans un four à fusion ou dans un four électrique, d'un premier matériau source d'alumine (comme des blocs de bauxites ou de l'alumine) et d'un deuxième matériau source d'oxyde de calcium (comme du calcaire ou de la chaux), puis du refroidissement brutal de ces matières fondues. Un clinker d'aluminate de calcium amorphe est ainsi le produit issu du four à fusion qui a subi un refroidissement rapide (gradient de température supérieur à 15°C par seconde). Ce clinker peut ensuite être broyé pour former une poudre.

En général, les premier et deuxième aluminates de calcium amorphes présentent respectivement un premier et un deuxième ratio molaire chaux sur alumine R1, R2 précis et qui sont éloignés l'un de l'autre. En effet, de façon particulièrement avantageuse, on peut obtenir d'autant plus d'aluminates de calcium amorphes finaux aux ratios molaires différents et se trouvant n'importe où dans l'intervalle prédéterminé, que lesdits premier et deuxième ratios molaires R1, R2 sont éloignés l'un de l'autre.

Ainsi, le premier aluminate de calcium amorphe est préférentiellement choisi pour son faible premier ratio molaire chaux sur alumine R1, tandis que le deuxième aluminate de calcium amorphe est en particulier choisi pour son haut deuxième ratio molaire chaux sur alumine R2.

De façon avantageuse, l'écart entre lesdits premier et deuxième ratios molaires R1, R2 est supérieur ou égal à 0,1, en particulier supérieur ou égal à 0,5, préférentiellement supérieur ou égal à 0,8.

On entend par un écart supérieur ou égal à 0,1 et valeurs suivantes, un écart de 0,1 ; 0,2 ; 0,3 ; 0,4 ; 0,5 ; 0,6 ; 0,7 ; 0,8 ; 0,9 ; 1 ; 1,1 ; 1,2 ; 1,3 ; 1,4 ; 1,5 ; 1,6 ; 1,7 ; 1,8 ; 1,9 ; 2 ; 2,1 ; 2,2 ; 2,3 ; 2,4 ; 2,5 ; 2,6 ; 2,7 ; 2,8 ; 3 ; 3,5 ; 4 ; 4,5 ; 5 ; 5,5 ; 6 ; 6,5 ; 7 ; 7,5 ; 8 ; 8,5 ; 9 ; 9,5, voire 10 ou plus.

En particulier, l'écart entre lesdits premier et deuxième ratios molaires R1 et R2 est inférieur ou égal à 20, en particulier inférieur ou égal à 5.

On entend par un écart inférieur ou égal à 20 et valeurs suivantes, un écart de 20 ; 19 ; 18 ; 17 ; 16 ; 15 ; 14 ; 13 ; 12 ; 11 ; 10 ; 9 ; 8 ; 7 ; 6 ; 5 ; 4,5 ; 4 ; 3,9 ; 3,8 ; 3,7 ; 3,6 ; 3,5 ; 3,4 ; 3,3 ; 3,2 ; 3,1 ; 3 ; 2,9 ; 2,8 ; 2,7 ; 2,6 ; 2,5 ; 2,4 ; 2,3 ; 2,1 ; 2 ; 1,9 ; 1,8; 1,7 ; 1,6; 1,5 ; 1,4; 1,3 ; 1,2 ; 1,1 ; 1 ; 0,9 ; 0,8 ; 0,7 ou moins.

Généralement, l'écart entre lesdits premier et deuxième ratios molaires R1 et R2 est supérieur ou égal à 0,1, de préférence supérieur ou égal à 0,5 et typiquement supérieur ou égal à 0,8 et inférieur ou égal à 20, de préférence inférieur ou égal à 9 et typiquement inférieur ou égal à 5.

Le premier ratio molaire R1 dudit premier aluminate de calcium amorphe est par exemple compris entre 0,01 et 3, en particulier entre 1 et 2.

Au sens de l'invention, un ratio molaire compris entre 0,01 et 3 comprend par exemple : 0,01 ; 0,02 ; 0,03 ; 0,04 ; 0,05 ; 0,06 ; 0,07 ; 0,08 ; 0,09 ; 0,10 ; 0,11 ; 0,12 ; 0,13 ; 0,14 ; 0,15 ; 0,16 ; 0,17 ; 0,18 ; 0,19 ; 0,20 ; 0,21 ; 0,22 ; 0,23 ; 0,24 ; 0,25 ; 0,26 ; 0,27 ; 0,28 ; 0,29 ; 0,30 ; 0,31 ; 0,32 ; 0,33 ; 0,34 ; 0,35 ; 0,36 ; 0,37 ; 0,38 ; 0,39 ; 0,40 ; 0,41 ; 0,42 ; 0,43 ; 0,44 ; 0,45 ; 0,5 ; 0,6 ; 0,7 ; 0,8 ; 0,9; 1,0; 1,1 ; 1,2 ; 1,3; 1,4; 1,5 ;1,6; 1,7 ; 1,8; 1,9; 2,0; 2,1 ; 2,2 ; 2,3 ; 2,4 ; 2,5 ; 2,6 ; 2,7 ; 2, 8 ; 2,9 ; 3,0.

Le deuxième ratio molaire R2 du deuxième aluminate de calcium amorphe est par exemple compris entre 1,5 et 15, de préférence entre 1,5 et 10, en particulier entre 1,8 et 8, typiquement entre 2 et 3.

Au sens de l'invention, un ratio molaire compris entre 1,5 et 20 comprend par exemple : 1,5 ; 1,6 ; 1,7 ; 1,8 ; 1,9 ; 2,0 ; 2,1 ; 2,2 ; 2,3 ; 2,4 ; 2,5 ; 2,6 ; 2,7 ; 2, 8 ; 2,9 ; 3,0 ; 4,0 ; 4,5 ; 5,0 ; 5,5 ; 6,0 ; 6,5 ; 7,0 ; 7,5 ; 8,0 ; 8,5 ; 9,0 ; 9,5 ; 10,0 ; 10,5 ; 11,0 ; 11,5 ; 12 ; 13 ; 14 ; 15 ; 16 ; 17 ; 18 ; 19 ; 20.

Tel qu'énoncé ci-dessus, les premier et deuxième aluminates de calcium amorphes peuvent comprendre de faibles proportions d'impuretés, telles que de la silice, de l'oxyde de fer, éventuellement du borate et du phosphate, ou toutes autres impuretés provenant des matières premières utilisées dans la fabrication de ces premier et deuxième aluminates de calcium amorphes. Ces impuretés se retrouvent alors également dans l'aluminate de calcium amorphe final.

De préférence, la silice, l'oxyde de fer, le borate et le phosphate lorsqu'ils sont présents dans les premier et deuxième aluminates de calcium amorphes représentent moins de 10% en masse par rapport à la masse totale dudit aluminate de calcium amorphe final.

En outre, au moins un des premier et deuxième aluminates de calcium amorphes compris dans ledit mélange formant l'aluminate de calcium amorphe final peut comprendre un composé organique comportant au moins deux fonctions hydrophiles et une chaîne hydrophobe.

Un tel composé organique constitue un agent antivieillissement desdits premier et deuxième aluminates de calcium amorphes.

Le composé organique représente de 0,025% à 5%, de préférence de 0,05% à 2,5%, avantageusement de 0,1% à 1% en masse par rapport à la masse totale du premier ou deuxième aluminate de calcium amorphe dans lequel il est compris.

De préférence, les premier et deuxième aluminates de calcium amorphes comprennent chacun un tel composé organique en tant qu'agent antivieillissement.

Par suite, du fait du mélange desdits premier et deuxième aluminates de calcium amorphes pour former l'aluminate de calcium amorphe final, ledit aluminate de calcium amorphe final comprend lui-même un tel composé organique.

Ainsi, la composition selon l'invention comprend elle-même un tel composé organique formant agent antivieillissement.

Par « fonction à caractère hydrophile », on entend des fonctions qui sont compatibles avec un milieu contenant de l'eau. Ces fonctions hydrophiles ont également la capacité de réagir avec des cations ou des éléments métalliques.

Les fonctions à caractère hydrophile convenant ici sont notamment les fonctions acides carboxyliques, anhydrides d'acides, halogénures d'acides, et amines primaires.

Les fonctions à caractère hydrophile préférées sont les fonctions acides carboxyliques, ou anhydrides d'acides.

Le caractère hydrophobe du composé organique est apporté par une chaîne hydrocarbonée aliphatique, aromatique, alkylaromatique ou arylaliphatique. En particulier, les chaînes aliphatiques, arylaliphatiques linéaires ou cycliques, ramifiées ou substituées sont préférées. Elles comprennent avantageusement de 2 à 13 atomes de carbone.

Par exemple, les composés organiques suivants peuvent convenir en tant qu'agent antivieillissement : les acides polycarboxyliques comme les acides dicarboxyliques tels que l'acide glutarique, l'acide succinique, l'acide adipique, l'acide octanedioïque, l'acide décanedioïque, dodécanedioïque, brassylique et leurs anhydres et halogénures d'acides, les acides phtaliques comme l'acide orthophtalique, l'acide téréphtalique, l'acide isophtalique ou un de leurs mélanges. L'acide adipique convient tout particulièrement en tant qu'agent antivieillissement.

Il est également possible d'utiliser des acides en mélange et plus particulièrement d'utiliser un mélange d'acide adipique, d'acide succinique et d'acide glutarique.

Avantageusement, les premier et deuxième aluminates de calcium comprenant un tel composé organique sont moins sensibles à l'humidité. Par suite, l'aluminate de calcium amorphe final est également moins sensible à l'humidité.

D'autre part, avantageusement, la composition obtenue selon le procédé de l'invention peut former un ciment d'aluminate de calcium amorphe.

Ainsi, la composition selon l'invention peut comprendre, en masse, par rapport à sa masse totale, au moins 20% dudit aluminate de calcium amorphe final, de préférence au moins 40 %, typiquement au moins 60% dudit aluminate de calcium amorphe final, voire jusqu'à 100% dudit aluminate de calcium amorphe final.

Au sens de l'invention, l'expression au moins 20% englobe 20%, 30%, 40%, 50%, 60%, 70%, 80%, 90%, 95%, 100%.

De façon classique, la composition obtenue selon le procédé de l'invention formant le ciment d'aluminate de calcium amorphe, peut être gâchée à l'eau. Par exemple, l'eau peut représenter 35% en masse par rapport à la masse totale sèche de ciment.

La composition obtenue selon le procédé de l'invention peut en outre comprendre un ou plusieurs autres composés choisis parmi : un sulfate de calcium, un ciment Portland, ou un de leur mélange, et éventuellement un ou plusieurs additifs.

Avantageusement, la composition obtenue selon le procédé de l'invention est alors adaptée à former un liant hydraulique.

En particulier, la composition obtenue selon le procédé de l'invention peut comprendre, en masse par rapport à sa masse totale sèche :

- de 35% à 75%, préférentiellement de 35% à 50%, dudit aluminate de calcium amorphe final tel que défini ci-dessus ;
- de 25% à 65%, préférentiellement de 50% à 65%, de sulfate de calcium, et
- de 0% à 5% d'un ou de plusieurs additif.

Le sulfate de calcium forme ainsi avec l'aluminate de calcium amorphe final un liant particulièrement avantageux appelé liant ettringitique.

Le terme « liant ettringitique » désigne ici un liant hydraulique susceptible de former de l'ettringite, à savoir une espèce minérale composée de sulfate de calcium et d'aluminium hydraté.

En particulier, le sulfate de calcium se trouve sous forme d'anhydrite, de gypse ou d'hémihydrate, d'origine naturelle ou synthétique.

De préférence, le sulfate de calcium se trouve sous forme d'anhydrite.

Par exemple, il peut s'agir d'anhydrite synthétique telle que celle commercialisée par la société Francis Flower.

Ici, le sulfate de calcium est sous forme de poudre d'anhydrite de diamètre médian d50 variant de 5 micromètres à 50 micromètres, préférentiellement de 20 micromètres à 30 micromètres.

En variante, la composition obtenue selon le procédé de l'invention peut comprendre, en masse par rapport à sa masse totale sèche :

- de 2% à 30%, de préférence de 4% à 20%, dudit aluminate de calcium amorphe final tel que défini ci-dessus,
- de 4% à 40%, de préférence de 10% à 28%, de sulfate de calcium,
- de 30% à 94%, préférentiellement de 52% à 86%, de ciment Portland, et
- de 0% à 5%, de préférence de 0,1% à 3% d'un additif.

En variante encore, la composition obtenue selon le procédé de l'invention peut comprendre en masse par rapport à sa masse totale sèche :

- de 10% à 35%, de préférence de 20% à 30%, dudit aluminate de calcium amorphe tel que défini ci-dessus,
- de 15% à 56%, de préférence de 30% à 55%, de sulfate de calcium,
- de 2% à 30%, préférentiellement de 4% à 20%, de ciment Portland, et
- de 0% à 5% d'un additif.

Le ciment Portland est connu de l'homme du métier et ne sera pas détaillé plus avant. On peut utiliser n'importe quel ciment Portland, tel que le ciment Portland normal, le ciment Portland à durcissement rapide, le ciment Portland à durcissement super-rapide, le ciment Portland blanc, etc. Notamment, on peut utiliser le ciment CEM I.

Les additifs éventuellement ajoutés aux compositions obtenues selon le procédé de l'invention formant des liants hydrauliques, peuvent être de différentes natures. Ils sont des additifs classiques de liants hydrauliques.

En général, ils sont ajoutés en de faibles proportions à la composition et confèrent à celle-ci des propriétés intéressantes.

Les additifs peuvent par exemple correspondre à des adjuvants accélérateurs / retardateurs de prise connus de l'homme de l'art.

Les accélérateurs de prise convenant pour la présente invention peuvent être de tout type connu. Leur utilisation permet de régler l'ouvrabilité du matériau obtenu. On peut citer, à titre d'exemples, l'aluminate de sodium, le silicate de sodium, l'aluminate de potassium, le sulfate d'aluminium, le carbonate de potassium, le carbonate de sodium, les sels de lithium tels que l'hydroxyde de lithium, le sulfate de lithium et le carbonate de lithium utilisables seuls ou en mélange.

De façon particulièrement avantageuse, le carbonate de sodium, en association avec du ciment Portland et un liant ettringitique selon l'invention accélère la prise de la composition gâchée à l'eau. Cela permet d'améliorer la résistance mécanique précoce du matériau, c'est-à-dire la résistance mécanique du matériau sur des temps inférieurs à 24 heures après le gâchage à l'eau,

Les retardateurs de prise utilisés convenant pour la présente invention peuvent être de tout type connu, on peut notamment citer, à titre d'exemples, l'acide citrique, l'acide tartrique, le gluconate, l'acide borique et leurs sels, utilisables seuls ou en mélange.

En particulier, les régulateurs de prise choisis parmi les accélérateurs de prise et les retardateurs de prise peuvent représenter de 0,01% à 5% en masse, de préférence 0,1% à 3% en masse par rapport à la masse totale de la composition selon l'invention.

L'additif peut également être un agent rétenteur d'eau et modificateur de rhéologie, choisi par exemple parmi la famille des éthers de cellulose, éthers de guar, éthers d'amidon, les polymères associatifs, les polymères obtenus par biofermentation tels que les gommes xanthane, gommes wellane, etc.

L'additif peut également être un agent antivieillissement, par exemple sous forme de poudre.

La composition obtenue selon le procédé de l'invention peut en outre comprendre des agrégats.

En particulier, la composition obtenue selon le procédé de l'invention peut comprendre en outre, en masse par rapport à la masse totale de la composition de 50% à 95%, préférentiellement de 60% à 90%, d'agrégats.

Avantageusement, la composition obtenue selon le procédé de l'invention est alors adaptée à former un mortier ou un béton en fonction de la taille des agrégats.

De façon classique, dans les mortiers, les agrégats présentent un diamètre moyen relativement faible, par exemple inférieur à celui des graviers. Ici, les agrégats sont du sable.

Au contraire, dans les bétons, les agrégats présentent un diamètre moyen plus gros ; il peut s'agir de graviers ou de gravillons.

Il faut noter qu'on entend par « masse totale de la composition », la masse de la composition comprenant lesdits agrégats.

Ainsi, un mortier selon l'invention peut comprendre, en masse par rapport à la masse totale de mortier sec,

- de 10% à 50%, préférentiellement de 20% à 40%, de l'une quelconque des compositions selon l'invention décrites précédemment (ciment ou liant hydraulique),
- de 50% à 90%, préférentiellement de 60% à 80%, d'agrégats.

En particulier, le taux de gâchage en eau de ce mortier varie de 10% à 50%, préférentiellement de 20% à 30%.

Similairement, un béton selon l'invention peut comprendre, en masse par rapport à la masse totale du béton sec,

- de 5% à 40%, préférentiellement de 10% à 30%, de l'une quelconque des compositions selon l'invention décrites précédemment,
- de 60% à 95%, préférentiellement de 70% à 90%, d'agrégats.

En particulier, le taux de gâchage en eau de ce béton varie de 5% à 30%, préférentiellement de 5% à 15%.

Les mortiers et bétons sont obtenus selon un procédé classique connu de l'homme du métier selon lequel on pèse séparément tous les composés de la composition utilisée et les agrégats, puis on les mélange avec de l'eau.

Ce procédé étant connu pour l'homme du métier, il ne sera pas décrit plus en détails.

La Demanderesse a démontré que de manière avantageuse, du point de vue de leurs propriétés, les mortiers formulés à partir des aluminates de calcium amorphes finaux décrits précédemment, de ratios molaires chaux sur alumine donnés, présentent des propriétés mécaniques et des réactivités similaires à celles des mortiers formulés avec des aluminates de calcium amorphes obtenus par voie chimique, de ratios molaires chaux sur alumine identiques.

Nous aurons compris à la lecture de ce qui précède que la composition obtenue selon le procédé de l'invention peut être utilisée pour former un ciment d'aluminate de calcium amorphe lorsqu'elle comprend principalement la poudre d'aluminate de calcium amorphe final.

Elle peut également être utilisée pour former un liant hydraulique, lorsqu'elle comprend ladite poudre d'aluminate de calcium amorphe final et d'autres liants hydrauliques.

Elle peut enfin être utilisée pour former un mortier ou un béton lorsqu'elle comprend ladite poudre d'aluminate de calcium amorphe final et/ou d'autres liants hydrauliques et des agrégats.

Nous allons désormais décrire le procédé de fabrication pour fabriquer la composition obtenue selon le procédé de l'invention.

En particulier, nous allons décrire un procédé de fabrication pour fabriquer l'aluminate de calcium amorphe final sous forme de poudre, autrement dit le ciment d'aluminate de calcium amorphe.

En général, l'aluminate de calcium amorphe final pourra être obtenu par simple mélange de poudre desdits premier et deuxième aluminates de calcium amorphes, ou par co-broyage des clinkers desdits premier et deuxième aluminates de calcium amorphes de manière à obtenir une poudre.

Ainsi, la présente invention propose un procédé de fabrication d'une composition comprenant un aluminate de calcium amorphe présentant un ratio molaire chaux sur alumine final RF choisi dans un intervalle prédéterminé qui s'étend entre une borne inférieure Ri et une borne supérieure Rs, ladite borne inférieure Ri étant différente de la borne supérieure Rs,

selon lequel,

a) on choisit un premier aluminate de calcium amorphe présentant un premier ratio molaire chaux sur alumine R1 strictement inférieur à la borne inférieure Ri dudit intervalle prédéterminé, et un deuxième aluminate de calcium amorphe présentant un deuxième ratio molaire chaux sur alumine R2 strictement supérieur à la borne supérieure Rs dudit intervalle prédéterminé,

b) on détermine les quantités respectives desdits premier et deuxième aluminates de calcium amorphes à mélanger de sorte que le ratio molaire chaux sur alumine final RF de l'aluminate de calcium amorphe, correspondant à la moyenne desdits premier et deuxième ratios molaires chaux sur alumine R1, R2 pondérée par lesdites quantités respectives, appartienne audit intervalle prédéterminé ;

c) on mélange lesdits premier et deuxième aluminates de calcium amorphes dans les quantités déterminées à l'étape b).

Avantageusement, le procédé selon l'invention comprend peu d'étapes et il est facile à mettre en œuvre. Ainsi, la composition selon l'invention est facile à réaliser.

Grâce au procédé selon l'invention, il est possible de déterminer les quantités respectives de premier et deuxième aluminates de calcium amorphes à mélanger pour que le ratio molaire final $R_F$ de l'aluminate de calcium amorphe soit égal à une valeur prédéterminée choisie dans ledit intervalle prédéterminé.

Le procédé de fabrication selon l'invention met en œuvre plusieurs étapes qui peuvent être réalisées par un opérateur.

Avant la mise en œuvre du procédé, l'opérateur détermine le ratio molaire final $R_F$ de l'aluminate de calcium amorphe compris dans la composition en fonction de l'application visée pour ladite composition.

Autrement dit, l'opérateur détermine la valeur du ratio molaire final $R_F$ qu'il souhaite atteindre dans ledit intervalle prédéterminé.

Ledit ratio molaire final RF est ainsi compris dans l'intervalle prédéterminé borné par les bornes inférieure et supérieure Ri, Rs.

Comme expliqué précédemment, ledit ratio molaire final RF associé à une application particulière peut être atteint à une incertitude près. Par exemple, cette incertitude vaut 5%, ou 10%, du ratio molaire final RF que l'on cherche à atteindre.

Ainsi, la borne inférieure Ri de l'intervalle prédéterminé est inférieure ou égale au ratio molaire final RF minoré de cette erreur. De façon analogue la borne supérieure Rs de l'intervalle prédéterminé est supérieure ou égale au ratio molaire final RF majoré de cette erreur.

Pour revenir au cas où l'incertitude vaut 5% du ratio molaire final RF, la borne inférieure Ri de l'intervalle prédéterminé est inférieure ou égale à 95% du ratio molaire final RF, et la borne supérieure Rs de l'intervalle prédéterminé est supérieure ou égale à 105% du ratio molaire final RF.

A l'étape a), l'opérateur choisit les premier et deuxième aluminates de calcium amorphes à mélanger.

Pour cela, l'opérateur choisit le premier aluminate de calcium amorphe de sorte que son ratio molaire, dit premier ratio molaire R1, soit strictement inférieur à la borne inférieure Ri de l'intervalle prédéterminé.

Similairement, l'opérateur choisit le deuxième aluminate de calcium amorphe de sorte que son ratio molaire, dit deuxième ratio molaire R2, soit strictement supérieur à la borne supérieure Rs de l'intervalle prédéterminé.

Ces premier et deuxième aluminates de calcium amorphes peuvent exister dans le commerce ou l'opérateur peut les fabriquer, par exemple par voie chimique.

Par exemple, les premier et deuxième aluminates de calcium amorphes décrits plus haut conviennent tout à fait.

Selon la variante présentée précédemment, pour obtenir un aluminate de calcium amorphe final dont le ratio molaire final RF appartient strictement à un intervalle prédéterminé ouvert relativement grand, par exemple à l'intervalle prédéterminé ]1,34 ; 2,2[, on peut choisir les premier et un deuxième aluminates de calcium amorphes présentant respectivement un premier ratio molaire R1 de 1,34 et un deuxième ratio molaire R2 de 2,2, chacun étant obtenu selon un procédé par voie chimique reproductible ajusté avec des paramètres adéquats.

Selon un premier mode de réalisation du procédé de fabrication, à l'étape a), les premier et deuxième aluminates de calcium amorphes sont choisis sous forme de poudre.

En particulier, l'opérateur peut acheter dans le commerce les premier et deuxième aluminates de calcium amorphes sous forme de poudre.

En variante, l'opérateur peut fabriquer par voie chimique les premier et deuxième aluminates de calcium amorphes sous forme de poudres.

En variante encore, l'opérateur peut acheter dans le commerce les premier et deuxième aluminates de calcium amorphes sous forme de clinkers, ou fabriquer les premier et deuxième aluminates de calcium amorphes sous forme de clinkers. L'opérateur met alors en œuvre une sous-étape de l'étape a) selon laquelle il broie séparément ces clinkers pour obtenir une poudre de chacun desdits premier et deuxième aluminates de calcium amorphes. Le broyage de chacun desdits clinkers peut être effectué dans un broyeur à boulet classique dans les conditions connues de l'homme du métier.

Selon un deuxième mode de réalisation du procédé de fabrication, à l'étape a), les premier et deuxième aluminates de calcium amorphes sont choisis sous forme de clinkers.

Ces clinkers sont généralement fabriqués par voie chimique. Ils peuvent également être achetés dans le commerce.

Quel que soit le mode de réalisation choisi, à l'étape b), l'opérateur calcule, selon un calcul de barycentre classique, lesdites quantités respectives de premier et deuxième aluminates de calcium amorphes à mélanger pour obtenir une quantité souhaitée d'aluminate de calcium amorphe final.

En général, lesdites quantités de premier aluminate de calcium amorphe, de deuxième aluminate de calcium amorphe, et d'aluminate de calcium amorphe final, sont calculées sous forme de masses, en grammes.

On approxime ici les masses desdits premier et deuxième aluminates de calcium amorphes et de l'aluminate de calcium amorphe final aux masses des composés chimiques d'aluminates de calcium amorphes seuls qu'ils comprennent, les éventuelles impuretés et/ou les éventuels agents de traitement compris dans lesdits premier et deuxième aluminates de calcium amorphes et dans l'aluminate de calcium amorphe final étant minoritaires.

Ainsi, le calcul suivant peut être utilisé pour calculer les première et deuxième masses M1, M2 de premier et deuxième aluminates de calcium amorphes à mélanger :

$$(M1 + M2) \times R_F = M1 \times R1 + M2 \times R2.$$

Par exemple, la Demanderesse a montré qu'en mélangeant 40%, en masse, d'un aluminate de calcium amorphe de premier ratio molaire R1 égal à 1,34 et 60%, en masse, d'un aluminate de calcium amorphe de deuxième ratio molaire R2 égal à 2,2, l'aluminate de calcium amorphe final présente un ratio molaire final RF de 1,81 ; tandis qu'en mélangeant ces mêmes premier et deuxième aluminates de calcium amorphes dans des proportions 35% / 65% ou 45%/55%, on obtient respectivement un ratio molaire final RF de 1,85 ou 1,77.

A l'étape c), l'opérateur mélange les premier et deuxième aluminates de calcium amorphes.

Selon le premier mode de réalisation du procédé, à l'étape c), les poudres d'aluminates de calcium amorphes sont mélangées directement pour former l'aluminate de calcium amorphe final sous forme de poudre.

Autrement dit, à l'étape c), on mélange lesdites poudres pour obtenir ladite composition comprenant l'aluminate de calcium amorphe.

Ces poudres sont mélangées dans un mélangeur approprié. Tout type de mélangeur adapté aux poudres peut convenir, par exemple le mélangeur de la marque *Lodige*® convient.

En général, l'étape de mélange présente une durée allant de 30 secondes à 30 minutes, de préférence de 1 minute à 10 minutes.

Cette étape de mélange s'effectue le plus souvent à température ambiante, à savoir à une température inférieure à 50°C, en général à une température comprise entre 15°C et 25°C.

En variante, le mélange desdites poudres peut s'effectuer à une température de mélange spécifique pour réaliser des traitements spéciaux sur les aluminates de calcium amorphes à partir d'additifs organiques. Dans ce cas, la température de mélange spécifique correspond à la température de fusion de l'additif organique utilisé.

Selon le deuxième mode de réalisation du procédé, à l'étape c), les clinkers de premier et deuxième aluminates de calcium amorphes sont co-broyés, c'est-à-dire qu'ils sont broyés et mélangés en même temps, de manière à former l'aluminate de calcium amorphe final sous forme de poudre.

Autrement dit, à l'étape c), on mélange lesdits clinkers par co-broyage pour obtenir ladite composition comprenant l'aluminate de calcium amorphe.

Lorsque les premier et deuxième aluminates de calcium amorphes sont choisis sous forme de clinkers, ce deuxième mode de réalisation du procédé permet de gagner du temps dans la mesure où il offre la possibilité de réaliser deux étapes (broyage puis mélange) en une seule (co-broyage).

En particulier, selon ce deuxième mode de réalisation du procédé, à l'étape c), les premier et deuxième clinkers d'aluminates de calcium amorphes sont co-broyés pendant une durée allant de 2 secondes à 30 minutes, en particulier de 1 minute à 10 minutes.

Bien entendu, tout type de broyeur adapté aux clinkers peut convenir pour réaliser le procédé selon l'invention, par exemple un broyeur à boulets.

Le co-broyage est en général réalisé sans contrôle de température spécifique, à savoir à une température en général comprise entre la température ambiante et la température atteinte naturellement par l'opération de broyage, qui peut atteindre 80°C, voire 100°C ou 160°C.

En variante, le co-broyage desdits clinkers peut s'effectuer à une température de mélange contrôlée pour réaliser des traitements spéciaux sur les aluminates de calcium amorphes à partir d'additifs organiques. Dans ce cas, la température de mélange spécifique correspond à la température de fusion de l'additif organique utilisé.

Bien sûr, la composition fabriquée selon ce procédé présente les mêmes caractéristiques que celles de la composition selon l'invention. Dans la mesure où elles ont déjà été décrites, elles ne seront pas plus amplement détaillées ci-dessous.

On précisera simplement que le ciment (ou poudre) d'aluminate de calcium amorphe final obtenu à l'étape c) de ce procédé présente en général un diamètre médian d50 inférieur ou égal à 100 $\mu$m, de préférence inférieur ou égal à 75 $\mu$m, typiquement inférieur ou égal à 50 $\mu$m. Généralement, le diamètre médian d50 dudit ciment d'aluminate de calcium amorphe, mesuré par granulométrie laser, varie entre 5 $\mu$m et 30 $\mu$m.

En particulier, le ciment d'aluminate de calcium amorphe présente une surface spécifique Blaine, mesurée selon la norme NF EN196-6, comprise entre 2500 cm$^2$/g et 9000 cm$^2$/g.

Optionnellement, à l'étape c), l'opérateur peut choisir d'ajouter un ou plusieurs composés choisis parmi : un sulfate de calcium, un ciment Portland, ou un de leur mélange, et éventuellement un ou plusieurs additifs, qui se trouvent généralement également sous forme de poudre.

La composition ainsi obtenue forme alors un liant selon l'invention, et peut être gâchée à de l'eau.

Il faut noter qu'un procédé simplifié, basé sur le procédé selon l'invention décrit ci-dessus, peut être mis en œuvre pour fabriquer un ciment d'aluminate de calcium amorphe dont le ratio molaire final RF n'est pas choisi précisément, mais est simplement compris dans un intervalle donné.

Selon ce procédé simplifié, l'opérateur met uniquement en œuvre les étapes a) et c).

Selon ce procédé de fabrication simplifié, en mélangeant deux aluminates de calcium amorphes de ratios molaires distincts, on obtient une composition comprenant un aluminate de calcium amorphe dont le ratio molaire est nécessairement strictement compris dans un intervalle délimité par les premier et deuxième ratios molaires R1, R2 des premier et deuxième aluminates de calcium amorphes de départ.

D'une façon générale, l'invention décrite présente plusieurs avantages.

Notamment, elle offre une grande flexibilité dans l'obtention des compositions comprenant un aluminate de calcium amorphe final puisqu'on peut obtenir une multitude d'aluminates de calcium amorphes finaux à partir de seulement deux aluminates de calcium amorphes initiaux, et ce simplement en faisant varier la proportion de l'un et de l'autre dans le mélange. Autrement dit, en faisant varier la quantité de chacun des premier et deuxième aluminates de calcium amorphes dans le mélange, on peut atteindre un grand nombre de ratios molaires finaux RF différents compris dans l'intervalle prédéterminé.

Par conséquent, il n'est plus nécessaire de passer par la voie chimique pour obtenir un aluminate de calcium amorphe devant présenter un ratio molaire chaux sur alumine particulier pour correspondre à une application envisagée, dès lors que ce ratio molaire particulier est situé entre les premier et deuxième ratios molaires R1, R2 d'aluminates de calcium amorphes connus.

De plus, le procédé selon l'invention simplifie l'obtention des compositions comprenant un aluminate de calcium amorphe dans la mesure où il ne comprend que très peu d'étapes, et dans la mesure où toutes ces étapes sont simples à mettre en œuvre.

D'ailleurs, le procédé de fabrication selon l'invention est reproductible.

En outre, le procédé de fabrication selon l'invention simplifie d'autant plus l'obtention de compositions comprenant un aluminate de calcium amorphe final, que lesdits premier et deuxième aluminates de calcium amorphes de départ sont obtenus facilement par voie chimique ou tout autre procédé équivalent.

Par ailleurs, grâce à l'invention, le nombre d'aluminates de calcium amorphes à fabriquer par voie chimique est réduit, ce qui présente l'avantage de faciliter la gestion des stocks, limiter les pertes de production dues aux transitions lors de la fabrication ou du broyage, etc.

En outre, le temps nécessaire à l'obtention des compositions comprenant un aluminate de calcium amorphe final est fortement réduit par rapport au temps d'obtention des aluminates de calcium amorphes par voie chimique.

En outre et comme cela sera montré dans la partie expérimentale, les ciments d'aluminates de calcium amorphes obtenues selon le procédé de l'invention présentent, de façon surprenante, des propriétés réactives similaires à celles des ciments d'aluminates de calcium amorphes obtenus par voie chimique, à ratio molaire C/A équivalent.

En effet, du point de vue de leurs propriétés, les liants hydrauliques formulés à partir des ciments d'aluminates de calcium amorphes obtenues selon le procédé de l'invention de ratios molaires chaux sur alumine donnés, présentent des réactivités similaires à celles des liants hydrauliques formulés à partir d'aluminates de calcium amorphes obtenus par voie chimique, de ratios molaires chaux sur alumine proches. Ce n'est pas le cas des liants hydrauliques formulés à partir des aluminates de calcium obtenus par mélange d'un aluminate de calcium cristallin et d'un aluminate de calcium amorphe (voir description de l'art antérieur), qui présentent des propriétés réactives différentes de celles des liants hydrauliques formulés à partir d'aluminates de calcium amorphes obtenus par voie chimique.

De manière avantageuse, les ciments d'aluminates de calcium amorphes obtenues selon le procédé de l'invention sont en effet d'autant plus réactifs que leur ratio molaire chaux sur alumine final RF est élevé.

Cela est d'autant plus avantageux qu'en fonction dudit ratio molaire chaux sur alumine final RF, les ciments d'aluminates de calcium amorphes peuvent être utilisés pour des applications différentes.

Avantageusement, grâce à l'invention, on peut maîtriser le ratio molaire chaux sur alumine final RF des aluminates de calcium amorphes finaux, ce qui permet de contrôler la réactivité des matériaux (liants, mortiers, bétons) les comprenant.

Tel que mentionné dans la description de l'art antérieur, les compositions comprenant un aluminate de calcium amorphe présentant un ratio molaire final RF supérieur à 1,8 sont dites ultra-réactives dans la mesure où elles réagissent de façon exothermique quelques dizaines de secondes à quelques dizaines de minutes, après avoir été mises en contact avec de l'eau.

Ainsi, les compositions comprenant un aluminate de calcium amorphe présentant un ratio molaire final RF compris entre 1,8 et 2,0 ont globalement un temps de prise qui varie entre 10 minutes et 20 minutes et peuvent être utilisées pour réaliser des mortiers à prise rapide.

Les compositions comprenant un aluminate de calcium amorphe présentant un ratio molaire final RF compris entre 2,0 et 2,2 ont un temps de prise qui varie de quelques secondes à 10 minutes environ et peuvent être utilisées pour réaliser des bétons projetés (aussi appelés shotcretes) ou des capsules d'ancrages.

Au contraire, les compositions comprenant un aluminate de calcium amorphe présentant un ratio molaire final RF inférieur à 1,8 sont moins réactives dans la mesure où elles réagissent de façon exothermique parfois quelques heures après avoir été mises en contact avec de l'eau.

Ainsi, par exemple, les compositions comprenant un aluminate de calcium amorphe présentant un ratio molaire chaux sur alumine RF inférieur à 1,5 ont un temps de prise qui varie entre 2h et 4h et peuvent être employées pour faire de la colle à carrelage, ou des chapes.

Les compositions comprenant un aluminate de calcium amorphe présentant un ratio molaire final RF compris entre 1,5 et 1,8 ont un temps de prise qui varie entre 20 minutes et 2 heures et peuvent être utilisées pour des ragréages de sol auto-lissant ou dans la préfabrication de certains matériaux.

Les exemples suivants illustrent la présente invention, sans pour autant la limiter.

EXEMPLES

Dans une première partie, des essais préliminaires seront présentés visant à démontrer que les aluminates de calcium cristallins et amorphes ont, de façon surprenante, des comportements différents lorsqu'ils sont mélangés à de l'eau.

Dans une deuxième partie, des exemples d'aluminates de calcium amorphes obtenues selon le procédé de l'invention ont été préparés ainsi que des aluminates de calcium amorphes obtenus par voie chimique. Ils ont été intégrés dans des compositions pour former respectivement des ciments, des liants ettringitiques, ou encore des mortiers. La réactivité et la résistance mécanique de ces compositions ont été mesurées et comparées.

PREMIERE PARTIE - Essais préliminaires

*Protocole expérimental :*

Différents aluminates de calcium, amorphes ou cristallins, sont obtenus par voie chimique. Pour ce faire, de façon classique, une source d'oxyde de calcium (par exemple le calcaire) et une source d'alumine (par exemple des blocs de bauxite) sont introduites dans un four à fusion. Ces matières premières sont cuites dans le four à fusion à une température minimale permettant leur fusion et pendant une durée permettant d'obtenir leur fusion complète.

Le produit en fusion est ensuite refroidi très lentement pour former un clinker d'aluminate de calcium cristallin. Au contraire, le produit en fusion est refroidi rapidement (en quelques secondes) sous sa température de cristallisation pour former un clinker d'aluminate de calcium amorphe.

Chaque clinker résultant est ensuite broyé à une surface spécifique Blaine de l'ordre de de $4000 cm^2/g$.

La poudre ainsi obtenue est mise en suspension dans de l'eau à une concentration de 100g/L (grammes par litre), avec agitation.

Après 5 minutes d'agitation, un échantillon de solution est prélevé et filtré.

Une méthode de spectrométrie de masse à plasma induit (ou ICP pour *« Inductively Coupled Plasma »* en anglais) est ensuite mise en œuvre pour mesurer les concentrations en ions calcium et en ions aluminium dans la solution filtrée.

Le rapport de ces concentrations est converti en ratio molaire C/A.

Le tableau préliminaire ci-dessous présente les ratios molaires C/A des clinkers d'aluminates de calcium amorphe ou cristallin obtenus par voie chimique, et les ratios molaires C/A des solutions avec lesquelles ils ont été en contact.

La colonne « Delta » présente la différence entre les ratios molaires C/A d'un même aluminate de calcium pris sous forme de clinker ou pris en solution, rapportée sur le ratio molaire C/A de cet aluminate de calcium sous forme de clinker.

*Tableau préliminaire*

| Aluminates de calcium amorphes | | | Aluminates de calcium cristallins | | |
|---|---|---|---|---|---|
| C/A clinker | C/A solution | Delta (%) | C/A clinker | C/A solution | Delta (%) |
| 0,85 | 0,91 | 7 | 0,80 | 0,46 | -43 |
| 1,20 | 1,24 | 3 | 1,00 | 0,52 | -48 |
| 1,71 | 1,81 | 6 | 1,71 | 1,40 | -18 |
| 2,09 | 2,05 | -2 | | | |

*Résultats :*

Cette expérience préliminaire démontre que les ratios molaires C/A des aluminates de calciums cristallins en solution sont très différents des ratios molaires C/A des clinkers d'aluminate de calcium cristallin.

En outre, la différence entre le ratio molaire C/A de l'aluminate de calcium en solution et le ratio molaire C/A du clinker n'est pas constante d'un aluminate de calcium cristallin à l'autre.

Alors que la Demanderesse cherchait à expliquer l'écart de ratio molaire C/A lors de la mise en solution des aluminates de calcium cristallins, elle a eu la surprise de découvrir que cet écart est très réduit pour les aluminates de calcium amorphes, lesquels ont une dissolution dite congruente, c'est-à-dire que le ratio molaire C/A des espèces passant en solution est sensiblement le même que le ratio molaire C/A du clinker, rendant ainsi possible l'invention

En effet, de façon tout à fait surprenante, les ratios molaires C/A des aluminates de calcium amorphes pris sous forme de clinker ou pris en solution sont très similaires, et ce quelque soit l'aluminate de calcium amorphe étudié.

Dans le cas des aluminates de calcium cristallin, il semble qu'une partie de la chaux et de l'alumine contribuant à l'obtention du ratio molaire C/A du mélange de poudre initiale soit piégée dans des phases cristallines présentant un degré d'hydraulicité très faible voire nul, ce qui peut expliquer les différences entre les ratios molaires mesurés dans les clinkers et ceux mesurés en solution.

DEUXIEME PARTIE

Dans les tableaux 1, 2 et 3 illustrant les exemples, ACA signifie aluminate de calcium amorphe.

A/ Préparation des produits étudiés

*A1- Préparation des Premier et Deuxième Aluminates de calcium amorphes*

Le premier aluminate de calcium amorphe, nommé ci-après, ACA1, est obtenu selon le procédé de fabrication connu de l'aluminate de calcium Secar® 51 vendu par la société Kerneos, si ce n'est que l'étape finale consiste en un refroidissement spécifique.
En particulier, ACA1 a été obtenu selon le procédé comprenant les étapes suivantes :

- l'introduction dans un four à fusion de calcaire source d'oxyde de calcium (40% massique) et de blocs de bauxite source d'alumine (60% massique) ;
- la cuisson dans le four à fusion à une température minimale permettant la fusion de la composition, à savoir à 1550°C, pendant une durée permettant d'obtenir la fusion complète des matières premières, à savoir pendant 10 heures ;
- la récupération en sortie du four dudit aluminate de calcium liquide ;
- le refroidissement après cuisson dudit aluminate de calcium liquide de sorte à faire baisser brutalement sa température en dessous de sa température de cristallisation, afin d'obtenir un clinker d'aluminate de calcium amorphe, à savoir un refroidissement à un gradient de 15°C par seconde ;
- le broyage du clinker d'aluminate de calcium amorphe de sorte à obtenir une poudre de premier aluminate de calcium amorphe ACA1, appelée ciment de premier aluminate de calcium amorphe ACA1.

Le premier aluminate de calcium amorphe ACA1 présente un taux de phases amorphes supérieur ou égal à 80%, et son ratio molaire chaux sur alumine R1 est de 1,34.
Il présente en outre un diamètre médian d50 de 10 µm.
Le deuxième aluminate de calcium, nommé ci-après ACA2 est obtenu selon le procédé de fabrication connu de l'aluminate de calcium LDSF® RG vendu par la société Kerneos, si ce n'est que l'étape finale consiste en un refroidissement spécifique.
En particulier, ACA2 a été obtenu selon le procédé comprenant les étapes suivantes :

- l'introduction dans un four à fusion de calcaire source d'oxyde de calcium (60% massique) et de blocs de bauxite source d'alumine (40% massique) ;
- la cuisson dans le four à fusion à une température minimale permettant la fusion de la composition, à savoir à 1450°C, pendant une durée permettant d'obtenir la fusion complète des matières premières, à savoir pendant 10 heures ;
- la récupération en sortie du four dudit aluminate de calcium liquide ;
- le refroidissement après cuisson dudit aluminate de calcium liquide de sorte à faire baisser brutalement sa température en dessous de sa température de cristallisation afin d'obtenir un clinker d'aluminate de calcium amorphe, à savoir un refroidissement à un gradient de 15°C par seconde ;
- le broyage du clinker d'aluminate de calcium amorphe de sorte à obtenir un ciment de deuxième aluminate de calcium amorphe ACA2.

L'aluminate de calcium amorphe ACA2 présente un taux de phases amorphes supérieur ou égal à 90%, et son ratio molaire chaux sur alumine R2 est de 2,20 environ.
Il présente en outre un diamètre médian d50 de 10 µm.

A2 - Préparation des ciments d'aluminate de calcium obtenues selon le procédé de l'invention et *comparatifs*

Pour obtenir des compositions obtenues selon le procédé de l'invention formant des ciments, ACA1 et ACA2 sont mélangés dans un mélangeur de la marque Lodige pendant une durée de 5 minutes dans différentes proportions qui sont résumées dans le tableau 1 ci-après.
En outre, le ciment d'aluminate de calcium amorphe ACA-Transition sert d'exemple comparatif.
Ce ciment d'aluminate de calcium amorphe ACA-Transition est obtenu selon un procédé analogue au procédé d'obtention de ACA1 et ACA2. Ce procédé comprend les étapes suivantes :

- l'introduction dans un four à fusion de calcaire source d'oxyde de calcium (52% massique) et de blocs de bauxite source d'alumine (48% massique) ;
- la cuisson dans le four à fusion de ces matériaux à 1500°C, pendant 10 heures ;
- la récupération en sortie du four de l'aluminate de calcium liquide ;
- le refroidissement après cuisson dudit aluminate de calcium liquide afin d'obtenir un clinker d'aluminate de calcium amorphe, à savoir un refroidissement à un gradient de 15°C par seconde ;
- le broyage du clinker d'aluminate de calcium amorphe de sorte à obtenir le ciment d'aluminate de calcium amorphe ACA-Transition.

Le ratio molaire chaux sur alumine des différents ciments est évalué par une technique de cristallographie classique, dite technique de fluorescence aux rayons X, sur les poudres d'aluminates de calcium amorphes. Pour rappel, on note ces ratios molaires R1 pour ACA1, R2 pour ACA2 et RF pour les ciments selon l'invention. On notera RT le ratio molaire correspondant au ciment d'aluminate de calcium amorphe comparatif ACA-Transition.

Le tableau 1 ci-dessous présente les différents aluminates de calcium amorphes étudiés. Les pourcentages (%) donnent la masse du composé indiqué par rapport à la masse totale d'aluminate de calcium amorphe.

*Tableau 1*

| Nom | ACA1 (%) | ACA2 (%) | Composition interne | | |
|---|---|---|---|---|---|
| | | | Chaux (%) | Alumine (%) | $R_F$ |
| ACA1 | 100 | 0 | 38,0 | 51,8 | R1 = 1,34 |
| 1 | 90 | 10 | 39,2 | 50,8 | 1,41 |
| 2 | 80 | 20 | 40,4 | 49,7 | 1,48 |
| 3 | 70 | 30 | 41,6 | 48,7 | 1,56 |
| 4 | 60 | 40 | 42,8 | 47,6 | 1,64 |
| 5 | 50 | 50 | 44,1 | 46,6 | 1,72 |
| ACA-Transition | 0 | 0 | 47,7 | 49,5 | RT = 1,76 |
| 6 | 45 | 55 | 44,7 | 46,1 | 1,77 |
| 7 | 40 | 60 | 45,3 | 45,6 | 1,81 |
| 8 | 35 | 65 | 45,9 | 45,0 | 1,85 |
| 9 | 30 | 70 | 46,5 | 44,5 | 1,90 |
| 10 | 20 | 80 | 47,7 | 43,5 | 2,00 |
| 11 | 10 | 90 | 48,9 | 42,4 | 2,10 |
| ACA2 | 0 | 100 | 50,1 | 41,4 | R2 = 2,20 |

### A3- Préparation des liants ettringitiques : ciment d'aluminate de calcium amorphe + sulfate de calcium

Différentes compositions selon l'invention formant des liants ettringitiques ont été fabriquées.

Elles comprennent chacune un ciment d'aluminate de calcium amorphe et du sulfate de calcium.

En particulier, ces liants ettringitiques selon l'invention (LE2, LE4, LE7, LE9 dans le tableau 2 ci-dessous) ont été fabriqués à partir de certains des ciments d'aluminates de calcium amorphes du tableau 1.

Deux autres liants ettringitiques comparatifs (LE-ACA1 et LE-ACA2) ont également été fabriqués à partir des deux aluminates de calcium amorphes initiaux ACA1 et ACA2 (obtenus par voie chimique).

Le sulfate de calcium utilisé ici est de l'anhydrite synthétique que l'on peut se procurer auprès de la société Francis Flower.

Le tableau 2 ci-dessous donne la composition de ces différentes poudres de liants ettringitiques.

*Tableau 2*

| Nom | ACA utilisé | $R_F$ | Quantités (g) | | |
|---|---|---|---|---|---|
| | | | ACA | Sulfate de Calcium | Acide Citrique |
| **LE-ACA1** | ACA1 | R1 = 1,34 | | | |
| **LE2** | 2 | 1,48 | | | |
| **LE4** | 4 | 1,64 | 80 | 120 | 0,2 |
| **LE7** | 7 | 1,81 | | | |
| **LE9** | 9 | 1,90 | | | |
| **LE-ACA2** | ACA2 | R2 = 2,20 | | | |

*A4- Préparation de mortiers*

Différentes compositions selon l'invention formant des mortiers ont été fabriquées (M3, M4, M5, M6, M7, M8 et M9 dans le tableau 3 ci-dessous).

Elles comprennent chacune un ciment d'aluminate de calcium amorphe du tableau 1 du ciment Portland, du sulfate de calcium, du sable, et des additifs. Ces compositions sont gâchées à de l'eau dans les proportions données dans le tableau 3.

Des mortiers comparatifs ont été fabriqués à partir des aluminates de calcium amorphes initiaux (M-ACA1, M-ACA2) et comparatif (M-Transition) obtenus par voie chimique.

Le ciment Portland utilisé est le CEM I que l'on peut se procurer auprès de la société Lafarge. On peut se procurer le sable auprès de la société Normensand. Il s'agit ici de sable 0/2mm.

Le sulfate de calcium est de l'anhydrite synthétique que l'on peut se procurer auprès de la société Francis Flower.

Le tableau 3 ci-dessous donne la composition des différents mortiers étudiés.

Dans ce tableau, les pourcentages (%) sont donnés par rapport à la masse totale de mortier sèche (c'est-à-dire sans l'eau).

*Tableau 3*

| Nom | ACA utilisé | Quantités (g) | | | | | Quantités (%) | | |
|---|---|---|---|---|---|---|---|---|---|
| | | Ciment Portland | ACA | Sulfate de Calcium | Sable | Eau | Carbonate de Sodium | Acide Citrique | Acide Tartrique |
| **M-ACA1** | **ACA1** | 405 | 79,8 | 93,7 | 1350 | 270 | 0,273 | 0,03 | 0 |
| **M3** | 3 | | | | | | | | 0,02 |
| **M4** | 4 | | | | | | | | 0,025 |
| **M5** | 5 | | | | | | | | 0,03 |
| **M-Transition** | ACA-Transition | | | | | | | | 0,03 |
| **M6** | 6 | | | | | | | | 0,03 |
| **M7** | 7 | | | | | | | | 0,035 |
| **M8** | 8 | | | | | | | | 0,035 |
| **M9** | 9 | | | | | | | | 0,04 |
| **M-ACA2** | ACA2 | | | | | | | | 0,04 |

B/ Essais de caractérisation

*B1- Profils exothermiques*

On évalue la réactivité des ciments d'aluminates de calcium amorphes du tableau 1, des liants ettringitiques du tableau 2 et des mortiers du tableau 3 en réalisant des profils exothermiques.

Pour cela, les ciments d'aluminates de calcium amorphes et les liants ettringitiques sont gâchés à l'eau selon le protocole suivant.

On pèse 50 grammes de ciment d'aluminates de calcium amorphes, respectivement de liant ettringitique. Le ciment d'aluminate de calcium amorphe, respectivement le liant ettringitique, est introduit dans un gobelet plastique et mélangé à l'aide d'un abaisse-langue en bois.

Dans un autre gobelet plastique, on pèse la quantité d'eau appropriée de manière que l'eau représente 35% en masse par rapport à la masse totale de poudre, ce qui revient ici à peser 17,5 grammes d'eau.

On ajoute à la poudre l'eau ainsi pesée et on mélange à l'aide de l'abaisse-langue en bois, pendant 30 secondes.

Les mortiers sont réalisés dans les proportions de poudres, d'eau et d'additifs indiqués dans le tableau 3.

La réactivité des ciments d'aluminates de calcium amorphes, des liants ettringitiques et des mortiers ainsi formés est suivie immédiatement après les 30 secondes de mélange avec l'eau.

Pour réaliser les profils exothermiques, le gobelet plastique contenant le mélange (ciment gâché à l'eau, liant ettringitique gâché à l'eau, ou mortier) est positionné dans une boîte polystyrène isotherme percée au niveau du couvercle. On introduit dans cette boîte isotherme un capteur de température, dit thermocouple. Ce thermocouple n'entre pas en contact avec le matériau, il permet simplement de mesurer la température dans la boîte isotherme. La température en degré Celsius (°C) est ainsi suivie en fonction du temps en minutes (min).

Pendant toute la durée du test, la température extérieure est d'environ 23°C et le taux d'humidité relative est de 50%.

*B2- Essais de compression*

Des mesures de résistances mécaniques en compression sont réalisées sur les liants ettringitiques ainsi que sur les mortiers en cours de séchage.

Pour cela, on utilise les liants ettringitiques dont la composition est donnée dans le tableau 2, si ce n'est qu'ils comprennent 0,3% d'acide citrique, en masse par rapport à la masse totale de liant ettringitique sec.

Ces liants ettringitiques sont gâchés à l'eau selon le protocole décrit dans la section *B1-Profils exothermiques*. Les liants ettringitiques sont ensuite coulés de manière à former des prismes cylindriques présentant une hauteur de 25 millimètres (mm) et de diamètre 25 mm.

La résistance mécanique en compression de ces prismes est évaluée au bout de 7 jours de séchage à 23°C, sous un taux d'humidité relative de 50%.

De façon analogue, les mortiers dont la composition est donnée dans le tableau 3 sont coulés de manière à former des prismes de dimensions 4 centimètres (cm) $\times$ 4cm $\times$ 16cm.

La résistance mécanique en compression de ces prismes est évaluée au bout de 4 heures de séchage, puis de 24 heures de séchage.

La résistance mécanique en compression de ces différents matériaux est évaluée selon la norme EN 196-1 modifiée de la façon suivante : la température extérieure est de 23°C pendant les essais, le taux d'humidité relative est de 50%, et les prismes ne subissent pas de cure humide avant les essais de compression.

C/ Résultats

*C1- Réactivité*

Sur la figure 2, les profils exothermiques aux temps courts, à savoir entre 0 minute et 2 heures, des ciments d'aluminates de calcium amorphes gâchés à l'eau, selon l'invention (exemples 1, 2, 3, 5 et 8) ou obtenus par voie chimique (ACA1 et ACA2), montrent que la réactivité de ces ciments aluminates de calcium amorphes est étroitement liée à leur ratio molaire C/A.

En effet, on observe que la réaction est plus exothermique pour les ciments d'aluminates de calcium amorphes présentant un ratio molaire supérieur à 1,6 (exemples 5, 8 et ACA2) que pour les autres (exemples 1, 2 et 3, et ACA1).

En outre, plus le ratio molaire final RF est grand, plus la réaction exothermique se produit rapidement après le gâchage à l'eau. Ainsi, pour les aluminates de calcium amorphes dont le ratio molaire est supérieur à 1,6, la montée en température se produit entre une dizaine de secondes (ACA2) après le début du test et une dizaine de minutes (exemple 5) après le début du test.

D'ailleurs, la pente à l'origine de ces aluminates de calcium amorphes est très raide.

Au contraire, pour les aluminates de calcium amorphes de ratio molaire inférieur à 1,6, la réaction exothermique semble plus lente et plus modérée.

Enfin, on notera que la réactivité des ciments d'aluminates de calcium amorphes obtenues selon le procédé de l'invention (exemples 1 à 3, 5, 6 et 8) peut être directement comparée à la réactivité des ciments d'aluminates de calcium amorphes obtenus par voie chimique (ACA1 et ACA2).

Notamment, les temps de réaction des ciments d'aluminate de calcium amorphes obtenues selon le procédé de l'invention sont intermédiaires entre les temps de réaction des ciments d'aluminates de calcium amorphes obtenus par voie chimique (ACA1 et ACA2).

Sur la figure 3, les profils exothermiques aux temps courts, à savoir entre 0 minute et 50 minutes, des liants ettringitiques, selon l'invention (exemples LE2, LE4, LE7 et LE9) ou comparatifs (LE-ACA1 et LE-ACA2), confirment la réactivité observée sur les ciments d'aluminates de calcium amorphes.

Ainsi, plus le ratio molaire C/A des ciments d'aluminates de calcium amorphes est élevé, plus les liants ettringitiques qu'ils forment sont réactifs, c'est-à-dire plus ces liants ettringitiques réagissent de façon exothermique (exothermicité) après leur gâchage à l'eau.

En particulier, la réactivité (l'exothermicité ici) des liants ettringitiques selon l'invention est intermédiaire entre celles des deux liants ettringitiques comparatifs (LE-ACA1 et LE-ACA2).

Ainsi, la surface située sous la courbe, qui témoigne de la chaleur globalement générée par la réaction d'hydratation, est maximale pour le liant ettringitique comparatif LE-ACA1, minimale pour le liant ettringitique LE-ACA2, et intermédiaire pour les liants ettringitiques selon l'invention (LE2, LE4, LE7 et LE9).

Notamment, on remarque que plus la proportion de ciment d'aluminate de calcium amorphe obtenus par voie chimique ACA2 augmente dans la composition des liants ettringitiques selon l'invention, plus la réaction desdits liants ettringitiques selon l'invention est exothermique (l'exothermicité augmente, et la surface sous la courbe augmente).

On peut déduire de ces figures 2 et 3 que le ratio molaire C/A des ciments d'aluminates de calcium amorphes est un paramètre clé à maîtriser pour être en mesure de contrôler la réactivité des liants hydrauliques, et en particulier des liants ettringitiques.

L'invention offre une telle maîtrise dans la mesure où elle permet un contrôle précis du ratio molaire C/A des ciments d'aluminates de calcium amorphes.

### C2- Résistance mécanique

Sur la figure 4, on peut voir que la résistance à la compression mécanique des liants ettringitiques dépend du ratio molaire C/A des ciments d'aluminates de calcium amorphes utilisés.

Ainsi, plus le ratio molaire C/A est élevé, plus le liant ettringitique formé est résistant mécaniquement.

Ici, les résistances mécaniques des liants ettringitiques obtenues selon le procédé de l'invention sont intermédiaires entre les résistances mécaniques des liants ettringitiques comparatifs (LE-ACA1 et LE-ACA2).

Notamment, on remarque que plus la proportion de ciment d'aluminate de calcium amorphe obtenu par voie chimique ACA2 augmente dans la composition des liants ettringitiques selon l'invention, plus les liants ettringitiques selon l'invention sont résistants.

Sur la figure 5, on remarque que l'on peut classer les mortiers en différentes catégories, en fonction de leur résistance à la compression mécanique qui dépend elle-même du ratio molaire chaux sur alumine C/A des ciments d'aluminates de calcium amorphes utilisés.

En particulier, le ratio molaire C/A des ciments d'aluminates de calcium amorphes utilisés dans les compositions de mortier influence la résistance à la compression mécanique des mortiers précoces, à savoir 4h après la fin du gâchage.

La figure 5 montre que le comportement des mortiers à base d'aluminates de calcium amorphes obtenues selon le procédé de l'invention est prévisible en fonction du ratio molaire C/A.

Ainsi, grâce à l'invention, il est possible d'ajuster facilement le ratio molaire C/A de l'aluminate de calcium amorphe de manière à obtenir les résistances à la compression mécanique souhaitées 4 heures ou 24 heures après le gâchage.

Ceci n'est pas possible avec des aluminates de calcium cristallins.

A nouveau, ces résultats prouvent qu'il est important de pouvoir maîtriser avec précision le ratio molaire des ciments d'aluminates de calcium amorphes. L'invention est particulièrement utile à une telle maîtrise.

### C3- Comparaison de deux aluminates de calcium amorphes

Enfin, différents résultats soulignent le fait que les ciments d'aluminates de calcium amorphes obtenues selon le procédé de l'invention ont des propriétés au moins similaires à celles des ciments d'aluminates de calcium amorphes obtenus par voie chimique.

Par exemple, du point de vue de leur propriété réactive, les ciments d'aluminates de calcium amorphes obtenues selon le procédé de l'invention se comportent de façon similaire aux ciments d'aluminates de calcium amorphes comparatifs, obtenus par voie chimique.

En effet, la figure 6 montre que les ciments d'aluminates de calcium amorphes des exemples 5 et 6 (RF = 1,72 et RF=1,77) présentent une réactivité tout à fait similaire à celle du ciment d'aluminate de calcium amorphe comparatif ACA-Transition (RT = 1,76).

Les temps de réaction s'échelonnent entre quelques minutes et 20 minutes maximum et la température monte à près de 100°C pour le ciment de l'exemple 6, voire à 140°C pour le ciment de l'exemple 5 et le ciment comparatif ACA-Transition.

En outre, les pentes à l'origine des trois courbes de la figure 6 sont similaires (toutes les trois très raides), et il est possible de s'approcher du pic de température atteint par l'ACA-Transition.

De plus, la figure 7 prouve que le mortier obtenu à partir du ciment obtenue selon le procédé de l'invention de l'exemple 6 présente une réactivité tout à fait similaire à celle du mortier utilisant le ciment comparatif obtenu par voie chimique ACA-Transition. En effet, leurs profils exothermiques sont très proches, et environ 30 minutes après avoir été mélangés à l'eau, leur température diffère de seulement 5°C.

Par ailleurs, la figure 5 montre que les résistances à la compression mécanique des mortiers comprenant respectivement l'un des deux ciments obtenue selon le procédé de l'invention des exemples 5 et 6 ou le ciment comparatif ACA-Transition sont également similaires. En effet, ils présentent tous une résistance mécanique comparable, alors même que les autres paramètres expérimentaux tels que les éventuels retardateurs ou accélérateurs de prise n'ont pas été optimisés.

Ainsi, les résultats énoncés ci-dessus montrent que les propriétés des aluminates de calcium amorphes obtenus selon le procédé selon l'invention, sont prévisibles à partir des propriétés des aluminates de calcium amorphes mélangés.

En outre, les propriétés des aluminates de calcium amorphes obtenue selon le procédé de l'invention obtenus selon le procédé selon l'invention, sont analogues, à ratio molaire C/A équivalent, à celles des aluminates de calcium amorphes obtenus par voie chimique.


**Revendications**

1. Procédé de fabrication d'une composition comprenant un aluminate de calcium amorphe présentant un ratio molaire chaux sur alumine final (RF) choisi dans un intervalle prédéterminé qui s'étend entre une borne inférieure (Ri) et une borne supérieure (Rs), ladite borne inférieure (Ri) étant différente de la borne supérieure (Rs), selon lequel,

   a) on choisit un premier aluminate de calcium amorphe présentant un premier ratio molaire chaux sur alumine (R1) strictement inférieur à la borne inférieure (Ri) dudit intervalle prédéterminé, et un deuxième aluminate de calcium amorphe présentant un deuxième ratio molaire chaux sur alumine (R2) strictement supérieur à la borne supérieure (Rs) dudit intervalle prédéterminé,
   b) on détermine les quantités respectives desdits premier et deuxième aluminates de calcium amorphes à mélanger de sorte que le ratio molaire chaux sur alumine final (RF) de l'aluminate de calcium amorphe, correspondant à la moyenne desdits premier et deuxième ratios molaires chaux sur alumine (R1, R2) pondérée par lesdites quantités respectives, appartienne audit intervalle prédéterminé ;
   c) on mélange lesdits premier et deuxième aluminates de calcium amorphes dans les quantités déterminées à l'étape b).

2. Procédé de fabrication selon la revendication 41, dans lequel, à l'étape a), on choisit lesdits premier et deuxième aluminates de calcium amorphes sous forme de poudres, et, à l'étape c), on mélange ces poudres pour obtenir ladite composition comprenant l'aluminate de calcium amorphe.

3. Procédé de fabrication selon la revendication 1, dans lequel, à l'étape a), on choisit les premier et deuxième aluminates de calcium amorphes sous forme de clinkers, et, à l'étape c), on mélange ces clinkers par co-broyage pour obtenir ladite composition comprenant l'aluminate de calcium amorphe.

4. Procédé de fabrication selon la revendication 1, dans lequel l'écart entre lesdits premier et deuxième ratios molaires chaux sur alumine (R1, R2) est supérieur ou égal à 0,1, en particulier supérieur ou égal à 0,5, préférentiellement supérieur ou égal à 0,8.

5. Procédé de fabrication selon l'une des revendications 1 et 4, dans lequel ledit premier ratio molaire chaux sur alumine (R1) dudit premier aluminate de calcium amorphe est compris entre 0,01 et 3, en particulier entre 1 et 2.

**6.** Procédé de fabrication selon l'une des revendications 1 ou 4 à 5, dans lequel ledit deuxième ratio molaire chaux sur alumine (R2) dudit deuxième aluminate de calcium amorphe est compris entre 1,5 et 15, préférentiellement entre 2 et 3.

**7.** Procédé de fabrication selon l'une des revendications 1 ou 4 à 6, dans lequel la composition comprend en outre un composé organique comportant au moins deux fonctions hydrophiles et une chaîne hydrophobe.

**8.** Procédé de fabrication selon l'une des revendications 1 ou 4 à 7, dans lequel la composition comprend en outre au moins un composé choisi parmi : un sulfate de calcium, un ciment Portland, ou un de leur mélange, et éventuellement un ou plusieurs additifs.

**9.** Procédé de fabrication selon la revendication 8, dans lequel la composition comprend en masse par rapport à sa masse totale sèche :

- de 35% à 75%, préférentiellement de 35% à 50%, dudit aluminate de calcium amorphe tel que défini selon l'une des revendications 1 ou 4 à 7 ;
- de 25% à 65%,préférentiellement de 50% à 65%, de sulfate de calcium, et
- de 0% à 5% d'un additif.

**10.** Procédé de fabrication selon la revendication 8, dans lequel la composition comprend en masse par rapport à sa masse totale sèche :

- de 2% à 30%, de préférence de 4% à 20%, dudit aluminate de calcium amorphe tel que défini selon l'une des revendications 1 ou 4 à 7.
- de 4% à 40%, de préférence de 10% à 28%, de sulfate de calcium,
- de 30% à 94%, préférentiellement de 52% à 86%, de ciment Portland, et
- de 0% à 5% d'un additif.

**11.** Procédé de fabrication selon la revendication 8, dans lequel la composition comprend en masse par rapport à sa masse totale sèche :

- de 10% à 35%, de préférence de 20% à 30%, dudit aluminate de calcium amorphe tel que défini selon l'une des revendications 1ou 4 à 7,
- de 15% à 56%, de préférence de 30% à 55%, de sulfate de calcium,
- de 2% à 30%, préférentiellement de 4% à 20%, de ciment Portland, et
- de 0% à 5% d'un additif.

**12.** Procédé de fabrication selon la revendication 8, danslequel la composition comprend en outre, en masse par rapport à la masse totale de la composition de 50% à 95% préférentiellement de 60% à 90%, d'agrégats.

**Patentansprüche**

**1.** Verfahren zur Herstellung einer Zusammensetzung, die eine amorphes Calciumaluminat enthält, das ein finales Molverhältnis (R$_F$) Kalk zu Aluminiumoxid aufweist, ausgewählt in einem vorbestimmten Intervall, das sich zwischen einer unteren Grenze (Ri) und einer oberen Grenze (R$_S$) erstreckt, wobei die untere Grenze (Ri) unterschiedlich zur oberen Grenze (R$_S$) ist,
nach dem

a) ein erstes amorphes Calciumaluminat, das ein erstes Molverhältnis Kalk zu Aluminiumoxid (R1) streng kleiner als die untere Grenze (Ri) des vorbestimmten Intervalls aufweist, und ein zweites amorphes Calciumaluminat, das ein zweites Molverhältnis Kalk zu Aluminiumoxid (R2) streng größer als die obere Grenze (R$_S$) des vorbestimmten Intervalls aufweist, ausgewählt werden,
b) die jeweiligen zu mischenden Mengen des ersten und zweiten amorphen Calciumaluminats derart bestimmt werden, dass das finale Molverhältnis (R$_F$) Kalk zu Aluminiumoxid des amorphen Calciumaluminats entsprechend dem Mittel des ersten und zweiten Molverhältnisses (R1, R2) Kalk zu Aluminiumoxid, gewichtet durch die jeweiligen Mengen, zu dem vorbestimmten Intervall gehört;
c) das erste und zweite amorphe Calciumaluminat in den in Schritt b) bestimmten Mengen gemischt werden.

**2.** Herstellungsverfahren nach Anspruch 1, bei dem im Schritt a) das erste und zweite amorphe Calciumaluminat in Form von Pulver gewählt werden und im Schritt c) diese Pulver gemischt werden, um die das amorphe Calciumaluminat enthaltende Zusammensetzung zu erhalten.

**3.** Herstellungsverfahren nach Anspruch 1, bei dem im Schritt a) das erste und zweite amorphe Calciumaluminat in Form von Klinkern gewählt werden und im Schritt c) diese Klinker durch gemeinsames Zerkleinern gemischt werden, um die das amorphe Calciumaluminat enthaltende Zusammensetzung zu erhalten.

**4.** Herstellungsverfahren nach Anspruch 1, bei dem der Abstand zwischen dem ersten und zweiten Molverhältnis (R1, R2) Kalk zu Aluminiumoxid größer als oder gleich 0,1, insbesondere größer als oder gleich 0,5, vorzugsweise größer als oder gleich 0,8 ist.

**5.** Herstellungsverfahren nach einem der Ansprüche 1 und 4, bei dem das erste Molverhältnis (R1) Kalk zu Aluminiumoxid des ersten amorphen Calciumaluminats zwischen 0,01 und 3, insbesondere zwischen 1 und 2 liegt.

**6.** Herstellungsverfahren nach einem der Ansprüche 1 oder 4 bis 5, bei dem das zweite Molverhältnis (R2) Kalk zu Aluminiumoxid des zweiten amorphen Calciumaluminats zwischen 1,5 und 15, insbesondere zwischen 2 und 3 liegt.

**7.** Herstellungsverfahren nach einem der Ansprüche 1 oder 4 bis 6, bei dem die Verbindung außerdem eine organische Verbindung enthält, die mindestens zwei hydrophile Funktionalitäten und eine hydrophobe Kette aufweist.

**8.** Herstellungsverfahren nach einem der Ansprüche 1 oder 4 bis 7, bei dem die Zusammensetzung außerdem mindestens eine Verbindung enthält, ausgewählt aus: einem Calciumsulfat, einem Portland Zement oder einer ihrer Mischungen und gegebenenfalls ein oder mehrere Additive.

**9.** Verfahren zur Herstellung nach Anspruch 8, bei dem die Verbindung hinsichtlich der Masse in Bezug auf ihre trockene Gesamtmasse enthält:

- von 35% bis 75%, vorzugsweise von 35% bis 50% des amorphen Calciumaluminats, wie nach einem der Ansprüche 1 oder 4 bis 7 definiert;
- von 25% bis 65%, vorzugsweise von 50% bis 65% Calciumsulfat und
- von 0% bis 5% ein Additiv.

**10.** Verfahren zur Herstellung nach Anspruch 8, bei dem die Verbindung hinsichtlich der Masse in Bezug auf ihre trockene Gesamtmasse enthält:

- von 2% bis 30%, vorzugsweise von 4% bis 20% des amorphen Calciumaluminats, wie nach einem der Ansprüche 1 oder 4 bis 7 definiert;
- von 4% bis 40%, vorzugsweise von 10% bis 28% Calciumsulfat,
- von 30% bis 94%, vorzugsweise von 52% bis 86% Portland Zement und
- von 0% bis 5% ein Additiv.

**11.** Verfahren zur Herstellung nach Anspruch 8, bei dem die Verbindung hinsichtlich der Masse in Bezug auf ihre trockene Gesamtmasse enthält:

- von 10% bis 35%, vorzugsweise von 20% bis 30% des amorphen Calciumaluminats, wie nach einem der Ansprüche 1 oder 4 bis 7 definiert;
- von 15% bis 56%, vorzugsweise von 30% bis 55% Calciumsulfat,
- von 2% bis 30%, vorzugsweise von 4% bis 20% Portland Zement und
- von 0% bis 5% ein Additiv.

**12.** Verfahren zur Herstellung nach Anspruch 8, bei dem die Verbindung außerdem hinsichtlich der Masse in Bezug auf die Gesamtmasse der Verbindung von 50% bis 95%, vorzugsweise von 60% bis 90% Aggregate enthält.

**Claims**

**1.** A method for making a composition comprising an amorphous calcium aluminate with a final lime to alumina molar ratio ($R_F$) selected within a predetermined range, which extends between a lower limit (Ri) and an upper limit (Rs), said lower limit (Ri) being different from the upper limit (Rs), wherein,

a) a first amorphous calcium aluminate is chosen, with a first lime to alumina molar ratio (R1), strictly lower than the lower limit (Ri) of said predetermined range, and a second amorphous calcium aluminate is chosen, with a second lime to alumina molar ratio (R2), strictly higher than the upper limit (Rs) of said predetermined range,
b) the respective amounts of said first and second amorphous calcium aluminates to be combined are determined so that the final lime to alumina molar ratio ($R_F$) of amorphous calcium aluminate corresponding to the average of said first and second lime to alumina molar ratios (R1, R2), weighted by said respective amounts, is within said predetermined range;
c) said first and second amorphous calcium aluminates are combined according to the amounts determined in step b).

2. The method according to claim 1, wherein, in step a), said first and second amorphous calcium aluminates are chosen in the form of powders, and, in step c), these powders are combined so as to obtain said amorphous calcium aluminate-containing composition.

3. The method according to claim 1, wherein, in step a), the first and second amorphous calcium aluminates are chosen in the form of clinkers, and, in step c), these clinkers are combined through co-grinding so as to obtain said amorphous calcium aluminate-containing composition.

4. The method according to clam 1 wherein the difference between said first and second lime to alumina molar ratios (R1, R2) is higher than or equal to 0.1, in particular higher than or equal to 0.5, preferably higher than or equal to 0.8.

5. The method according to any one of claims 1 and 4, wherein said first lime to alumina molar ratio (R1) of said first amorphous calcium aluminate is ranging from 0.01 to 3, in particular from 1 to 2.

6. The method according to any one of claims 1 or 4 to 5, wherein said second lime to alumina molar ratio (R2) of said second amorphous calcium aluminate is ranging from 1.5 to 15, preferably from 2 to 3.

7. The method according to any one of claims 1 or 4 to 6, wherein the composition comprises moreover an organic compound which includes at least two hydrophilic functions and one hydrophobic chain.

8. The method according to any one of claims 1 or 4 to 7, wherein the composition moreover comprises at least one compound chosen from calcium sulfate, Portland cement, or a combination thereof, and optionally one or more additives.

9. The method according to claim 8, wherein the composition comprises by weight as compared to the dry total weight thereof:

- from 35% to 75%, preferably from 35% to 50%, of said amorphous calcium aluminate such as defined according to any one of claims 1 or 4 to 7;
- from 25% to 65%, preferably from 50% to 65%, of calcium sulfate, and
- from 0% to 5% of an additive.

10. The method according to claim 8, wherein the composition comprises by weight as compared to the dry total weight thereof:

- from 2% to 30%, preferably from 4% to 20%, of said amorphous calcium aluminate such as defined according to any one of claims 1 or 4 to 7,
- from 4% to 40%, preferably from 10% to 28%, of calcium sulfate,
- from 30% to 94%, preferably from 52% to 86%, of Portland cement, and
- from 0% to 5% of an additive.

11. The method according to claim 8, wherein the composition comprises by weight as compared to the dry total weight thereof:

- from 10% to 35%, preferably from 20% to 30%, of said amorphous calcium aluminate such as defined according to any one of claims 1 or 4 to 7,
- from 15% to 56%, preferably from 30% to 55%, of calcium sulfate,
- from 2% to 30%, preferably from 4% to 20%, of Portland cement, and
- from 0% to 5% of an additive.

12. The method according to claim 8, wherein the composition comprises moreover, by weight as compared to the composition total weight from 50% to 95%, preferably from 60% to 90%, of aggregates.

Fig.1

Fig.2

Fig.7

## Fig.3

## Fig.4

# Fig.5

# Fig.6

EP 3 303 250 B1

## RÉFÉRENCES CITÉES DANS LA DESCRIPTION

**Documents brevets cités dans la description**

- DE 3610586

- JP 2014129203 B

**Littérature non-brevet citée dans la description**

- Production Processes, Properties and Applications for Calcium Aluminate Cements. **KOPANDA et al.** Alumina Chemicals Science and Technology handbook. American Ceramic Society, 1990, 171-181